# EUROPÄISCHE PATENTSCHRIFT

(11) **EP 4 702 386 B1**
(45) Veröffentlichungstag und Bekanntmachung des Hinweises auf die Patenterteilung: **25.11.2026**
(21) Anmeldenummer: 24751999.4
(22) Anmeldetag: 31.07.2024
(51) Int. Cl.: B29D 11/00, G02B 1/18

(54) **VERFAHREN ZUR HERSTELLUNG EINER FUNKTIONELL BESCHICHTETEN KUNSTSTOFFLINSE, HERSTELLUNGSVORRICHTUNG UND FUNKTIONELL BESCHICHTETE KUNSTSTOFFLINSE**
METHOD FOR PRODUCING A FUNCTIONALLY COATED PLASTIC LENS, PRODUCTION DEVICE, AND FUNCTIONALLY COATED PLASTIC LENS
PROCÉDÉ DE PRODUCTION D'UNE LENTILLE EN PLASTIQUE À REVÊTEMENT FONCTIONNEL, DISPOSITIF DE PRODUCTION ET LENTILLE EN PLASTIQUE À REVÊTEMENT FONCTIONNEL

(30) Priorität: 02.08.2023 DE 102023003187
(43) Veröffentlichungstag der Anmeldung: 04.03.2026
(73) Patentinhaber: Rodenstock GmbH, 80687 München (DE)
(72) Erfinder: URBAN, Arne, 81827 München (DE); SCHERG, Gerd-Peter, 85598 Baldham (DE)
(74) Vertreter: Wallinger Ricker Schlotter PartGmbB
(86) Internationale Anmeldenummer: PCT/EP2024/071702
(87) Internationale Veröffentlichungsnummer: WO 2025/027085

(56) Entgegenhaltungen:
- US-A1- 2006 251 795
- US-A1- 2019 002 635
- US-A1- 2021 277 258

## Beschreibung

Die vorliegende Erfindung betrifft ein Verfahren zur Herstellung einer funktionell beschichteten Kunststofflinse, eine Herstellungsvorrichtung und eine funktionell beschichtete Kunststofflinse.

Es ist aus dem Stand der Technik bekannt, Kunststofflinsen, insbesondere Kunststoffbrillengläser, herzustellen, welche eine funktionelle Beschichtung aufweisen bzw. mit einer funktionellen Beschichtung versehen sind. Eine funktionelle Beschichtung kann der Linse zum Beispiel eine Abweisung von Schmutz und Wassertropfen verleihen. Um gegenüber Schmutz und Wassertropfen abweisend zu sein, besitzt die funktionelle Beschichtung in der Regel sowohl oleophobe als auch hydrophobe Eigenschaften. Ein Maß hierfür ist der jeweilige Kontaktwinkel, den eine entsprechende Flüssigkeit auf der Oberfläche des Brillenglases ausbildet. Hierbei gilt im Allgemeinen, dass die oleophoben und hydrophoben Eigenschaften umso ausgeprägter sind, je größer der Kontaktwinkel der jeweiligen Flüssigkeit auf der Oberfläche des Brillenglases ist. Bei einer solchen hydrophoben und/oleophoben Beschichtung handelt es sich typischerweise um funktionelle Moleküle, die eine Kopf- bzw. Kopplungs- bzw. Ankergruppe zur Anbindung an die Oberfläche der Linse, sowie eine funktionelle Gruppe bzw. Schwanzgruppe, die für die gewünschten Eigenschaften wie zum Beispiel Hydrophobie und/oder Oleophobie verantwortlich ist, aufweisen. Typischerweise ist die Kopplungsgruppe Silan-basiert und weist beispielsweise Alkoxygruppen wie Trimethoxy- oder Triethoxysilan oder Chlorogruppen wie Trichlorsilan auf. Die funktionelle Gruppe für zum Beispiel Wasser- und/oder Ölabweisung wird durch die restliche Alkyl- oder Alkyletherkette des Moleküls bestimmt. Die Alkyl- oder Alkyletherkette kann zusätzlich vollständig oder teilweise fluoriert sein. Die Kopplung erfolgt in der Regel durch Bildung eines Silanols im Rahmen einer Hydrolysereaktion. Vorteilhafterweise kann darauffolgend im Rahmen einer Kondensationsreaktion eine Anbindung des Silanols über reaktive OH-Gruppen erfolgen, zum Beispiel mit OH-Gruppen einer mit einer funktionellen Beschichtung zu versehenden Linse.

Solche funktionellen Beschichtungen, auch als Topcoat oder Cleancoat bezeichnet, werden häufig in Vakuumbeschichtungsanlagen auf Linsen aufgebracht, wobei sich das Beschichtungsmaterial als Dampfniederschlag unter Ausbildung der funktionellen Beschichtung auf der Linse, insbesondere auf der Oberfläche der Linse, abscheidet. Hierfür geeignete Vakuumbeschichtungsanlagen weisen meist einen thermischen Verdampfer auf, in welchem insbesondere durch Anlegen eines elektrischen Stroms an dem ohmschen Widerstand des Verdampfers thermische Energie freigesetzt wird, welche das Beschichtungsmaterial verdampfen lässt. Typische Vakuumbeschichtungsanlagen, in welchen Linsen mit einer Vergütung wie einer Entspiegelungs- und/oder Verspiegelungsbeschichtung versehen werden können, weisen meist einen solchen thermischen Verdampfer auf, d.h. die Linsen müssen nicht umgelagert werden, sondern das Aufbringen einer solchen funktionellen Beschichtung kann direkt im Anschluss an eine Vergütungsbeschichtung stattfinden. Das für eine funktionelle Beschichtung vorgesehene Beschichtungsmaterial liegt dabei in der Regel in Form eines Trägermaterials wie einer Tablette oder Pille vor, welche mit der Substanz versetzt sind. Hierbei kann es sich bei den Trägermaterialien beispielsweise um poröse Keramikkörper oder um Metallkörper gefüllt mit Stahlwolle handeln. Aufgrund ihrer großen Oberfläche können diese Trägermaterialien Flüssigkeiten wie beispielsweise die funktionellen Moleküle gut speichern. Diese Träger werden im thermischen Verdampfer erhitzt und die Substanz zum Verdampfen gebracht, wobei der sich bildende Dampf des Beschichtungsmaterials sich sodann als Niederschlag im Wesentlichen gleichförmig in der Beschichtungsanlage, und damit auch auf der Linse, abscheidet, wobei typische Aufdampfraten hydrophober und/oder oleophober Schicht im Bereich von 0,1 nm/s bis 1,0 nm/s liegen. Das für die Hydrolysereaktion benötigte Wasser kann zum Beispiel als Restgas im Hochvakuum der Vakuumbeschichtungsanlage vorhanden sein. Der Anteil an Wasser im Restgas kann allerdings je nach Hintergrunddruck der Kammer und Reinigungszustand variieren. Somit kann auch die Reaktion zur Anbindung an die Linsenoberfläche entsprechend variieren, d.h. besser oder schlechter funktionieren, was auch die Qualität der hydrophoben und/oder oleophoben Schicht beeinflussen kann. Hinzukommend kann auch eine Reaktion zwischen den funktionellen Molekülen untereinander erfolgen, wobei die Kopplungsgruppen zweier Moleküle, über die im Rahmen der Hydrolysereaktion ausgebildeten OH-Gruppen, miteinander binden können, so dass keine Bindung mit der Linsenoberfläche mehr erfolgen kann. Die Reaktionsbedingungen können daher von verschiedenen Faktoren abhängen und sind somit nur bedingt kontrollierbar bzw. einstellbar.

Ein alternatives Verfahren zum Versehen einer Linse mit einer funktionellen Beschichtung ist ein Tauchverfahren, bei welchem die Linse in ein Tauchbad eingetaucht wird, enthaltend die funktionellen Moleküle in einer im Wesentlichen gelösten bzw. dispergierten Form. Durch das, insbesondere wiederholte, Eintauchen der zu beschichtenden Linse in das Tauchbad findet eine Benetzung der Linse mit der in dem Tauchbad in gelöster Form vorliegenden Moleküle der funktionellen Beschichtung statt. Während eines anschließenden Trocknungsvorgangs findet ein Aushärten der funktionellen Beschichtung statt, worunter insbesondere das Verdampfen von in der Beschichtung noch enthaltenen Lösemitteln bzw. Trägermitteln verstanden wird. Dieses Verfahren hat vor allem als Nachteil, dass hierfür eine eigene Anlage (Tauchbeschichtungsanlage) vorzusehen ist und die Linsen für die Beschichtung in entsprechenden Halteeinrichtungen für den Tauchbeschichtungsvorgang angeordnet werden müssen, was mit einem entsprechenden Arbeitsaufwand und damit mit höheren Herstellkosten verbunden ist.

Atomic Layer Deposition (ALD) ist ein etabliertes Beschichtungsverfahren, um sehr präzise dünne Schichten herzustellen. **ALD** wird typischerweise in der Halbleiterbranche eingesetzt. Die Vorteile von **ALD** sind eine präzise Kontrolle der Schichtdicke auf Monolagen- bzw. Angström-Niveau. Die meisten ALD-Prozesse basieren auf binären Reaktionssequenzen, bei denen Oberflächenreaktionen stattfinden und ein binärer Verbindungsfilm, auch als Schicht bezeichnet, abgeschieden wird. Hierfür werden in einem sequenziellen Zyklus Präkursorverbindungen, bevorzugt in gasförmiger Phase, in einer Prozesskammer bereitgestellt, in der sich die mit einer Beschichtung zu versehenden Linse(n) befindet bzw. befinden. Hierbei wird zunächst eine erste Präkursorverbindung bereitgestellt, welche an der Oberfläche der mit einer Beschichtung zu versehenden Linse(n) adsorbiert. Überschüssiges und ungebundenes Material der ersten Präkursorverbindung wird dann wieder aus der Prozesskammer entfernt und anschließend wird eine zweite Präkursorverbindung (Reaktant) bereitgestellt. Diese reagiert mit der an der Substratoberfläche adsorbierten ersten Präkursorverbindung. Anschließend wird die Prozesskammer von überschüssigem und ungebundenen Material der zweiten Präkursorverbindung gereinigt und ein weiterer Zyklus beginnt von vorne. Werden diese Schritte sequenziell wiederholt, kann mit sehr hoher Genauigkeit Monolage für Monolage abgeschieden werden. Die beiden Präkursorverbindungen befinden sich, im Gegensatz zu dem oben beschriebenen Beschichtungsverfahren, somit nur an der Oberfläche der zu beschichtenden Linse(n) im direkten Kontakt, aber nicht in ihren Gasphasen, wodurch mögliche Gasphasenreaktionen unterdrückt werden können, welche beispielsweise zu einer nicht homogenen Abscheidung führen könnte, wie oben beschrieben zum Beispiel durch unzureichende Hydrolysereaktion und/oder Wechselwirkung der funktionellen Moleküle untereinander. ALD zeigt daher insbesondere bei dünnen Beschichtungen Vorteile, da diese mit hoher Präzision bei dennoch akzeptabler Prozesszeit abgeschieden werden können. Bei Beschichtungen mit mehreren 100 nm Gesamtschichtdicke der Beschichtung, wie es typischerweise bei einer Entspiegelungsbeschichtung der Fall ist, ist ALD aus wirtschaftlicher Sicht wegen der langen Prozesszeit weniger geeignet. Ein Nachteil des ALD-Verfahrens ist, dass dieses hohe Temperaturen voraussetzt, zumeist Temperaturen von mehreren hundert Grad Celsius und damit nicht für die Herstellung von Beschichtungen auf Kunststofflinsen tauglich ist, da diese in der Regel bei deutlich niedrigeren Temperaturen bereits ihre mechanische Festigkeit verlieren und im Rahmen eines solchen Verfahrens zerstört werden würden.

Die US 2019/002635 A1 betrifft eine Silan-Verbindung aufweisend eine perfluorierte (Poly-)Ethergruppe.

Aufgabe der vorliegenden Erfindung ist es daher, ein Verfahren zum Herstellen einer funktionell beschichteten Kunststofflinse bereitzustellen, welches die oben genannten Nachteile überkommt. Die Aufgabe wird durch ein Verfahren mit den Merkmalen des Anspruchs 1 sowie durch eine funktionell beschichtete Kunststofflinse mit den Merkmalen des Anspruchs 11, gelöst. Bevorzugte Ausführungsformen sind Gegenstand der jeweiligen abhängigen Ansprüche.

Ein Aspekt betrifft ein Verfahren zum Herstellen einer funktionell beschichteten Kunststofflinse, insbesondere eines Kunststoffbrillenglases, wobei das Verfahren die folgenden Schritte aufweist:
(I) Bereitstellen einer Kunststofflinse, aufweisend ein Substrat aus Kunststoffglas;
(II) Bereitstellen einer gasförmigen Phase einer ersten Präkursorverbindung A zum Erhalt zumindest einer, durch Adsorption der Präkursorverbindung A, modifizierten Oberfläche der Kunststofflinse;
(III) Entfernen von überschüssigem, nicht an der modifizierten Oberfläche der Kunststofflinse adsorbiertem, Material der Präkursorverbindung A;
(IV) Bereitstellen einer gasförmigen Phase einer zweiten Präkursorverbindung B, welche mit der an der modifizierten Oberfläche adsorbierten Präkursorverbindung A reagiert, und als Produkt der Reaktion das Ausbilden einer Monolage der funktionellen Schicht auf der Oberfläche der Kunststofflinse bewirkt;
(V) Entfernen von überschüssigem Material der Präkursorverbindung B, welches keine Verbindung mit der modifizierten Oberfläche eingegangen ist;
(VI) Erhalten der funktionell beschichteten Kunststofflinse,
wobei die ausgebildete funktionelle Beschichtung (2) der Kunststofflinse (1) hydrophobe und/oder oleophobe Eigenschaften verleiht.

Vorzugsweise wird das Verfahren, insbesondere die Schritte (II) und (IV), bei einer Temperatur von kleiner oder gleich 100 °C, bevorzugt kleiner oder gleich 75 °C, besonders bevorzugt kleiner oder gleich 50 °C, durchgeführt.

Das vorgeschlagene Verfahren eignet sich zum Herstellen einer funktionell beschichteten Kunststofflinse, d.h. es wird eine Kunststofflinse mit einer funktionellen Beschichtung versehen. Ein solches Verfahren wird bevorzugt in einer Vorrichtung durchgeführt, welche zumindest eine Prozesskammer (auch Rezipient genannt) aufweist, in welchem die, mit einer funktionellen Beschichtung zu versehende, Kunststofflinse bereitgestellt wird. Eine funktionelle Beschichtung im Sinne der Erfindung meint eine zusätzlich auf die Kunststofflinse aufgebrachte Beschichtung, welcher der Kunststofflinse hydrophobe und/oder oleophobe Eigenschaften verleiht. Eine Kunststofflinse ist ein optischer Gegenstand, aufweisend ein Substrat gebildet aus einem Kunststoffglas, wobei das Kunststoffglas bevorzugt im Wesentlichen aus Poly(thio)urethan, Polymethylmethacrylat, Polymethylacrylat, Polycarbonat, Polyacrylat oder Polydiethylenglycolbisallylcarbonat gebildet ist. Auch Kombinationen hiervon, sowie andere Kunststoffmaterialien für das Kunststoffglas sind denkbar, solange sie im Wesentlichen transparent sind und/oder optische Eigenschaften aufweisen, welche sie als Kunststoffglas für eine Linse tauglich machen. Eine Kunststofflinse weist im Allgemeinen zwei Flächen bzw. Oberflächen auf, von denen eine oder beide einen Krümmungsradius aufweisen können, insbesondere auch einen sich unterscheidenden Krümmungsradius, welcher der Linse eine optische Brechkraft verleiht. Eine solche Kunststofflinse kann ein Linsenfertigprodukt sein, d.h. eine Linse, bei der beide Oberflächen bereits fertig bearbeitet sind, worunter verstanden wird, dass beide Oberflächen bereits die gewünschten optischen Eigenschaften besitzen. Die Linse kann aber auch ein Halbfertigprodukt oder Halbfertigerzeugnis sein, bei welchem nur eine der beiden Oberflächen bereits die gewünschte optische Eigenschaft aufweist und die andere Oberfläche noch unbearbeitet ist, d.h. noch nicht die gewünschte optische Eigenschaft aufweist. Kunststofflinsen im Sinne der Erfindung können vorteilhafterweise, neben der/den optische/n Eigenschaft/en, auch zusätzliche Veredelungen besitzen. Hierunter sind alle, dem Fachmann geläufigen, Veredelungen zu verstehen, wozu insbesondere zusätzlich aufgebrachte Beschichtungen und/oder Lackierungen zählen. Beispiele für typische Lackierungen wären Pufferlackschichten zur Erhöhung der Bruchfestigkeit und/oder Hartlackschichten zur Erhöhung bzw. Verbesserung der mechanischen Beständigkeit, insbesondere der Kratzfestigkeit. Beispiele für typische Beschichtungen sind Verspiegelungen und/oder Entspiegelungen, insbesondere Antireflexbeschichtungen. Letztere verleihen der Kunststofflinse ein vermindertes Reflexionsvermögen und Unterdrücken auf diese Weise ungewollte Reflexionen. Mit anderen Worten versteht sich im Sinne der Erfindung unter einer Kunststofflinse ein beliebiger Rohling oder auch eine bereits bearbeitete Linse, insbesondere auch eine bereits bearbeitete und vergütete Linse. Insbesondere als vergütete Linse kann diese weitere, vorteilhafte Eigenschaften aufweisen, wie zum Beispiel einen verbesserte Antistatik zur Verminderung der Anhaftung von Staubpartikeln, und/oder einen UV-Filter zum Schutz bzw. zur Abschwächung der Transmission von ultravioletter Strahlung, und/oder einen Blau-Filter zum Schutz bzw. zur Abschwächung der Transmission von Strahlung aus dem blauen Spektralbereich.

Es versteht sich, dass das auf die Kunststofflinse angewandte Verfahren auch auf andere Kunststoffkörper oder Glaskörper angewandt werden kann, ob diese transparent sind oder intransparent oder ob diese als optische Linse verwendet werden oder nicht. Daher kann der Begriff Kunststofflinse im Sinne dieser Anmeldung auch durch den Begriff Kunststoffkörper oder Glaskörper ersetzt werden, wobei diese Kunststoff- bzw. Glaskörper insbesondere als Fenster, Sensorabdeckung, Schutzglas, Leuchtmittelabdeckung, Fassadenelement, usw. verwendet werden können.

Im Folgenden werden die einzelnen Schritte des erfindungsgemäßen Verfahrens näher beschrieben:
In einem ersten Schritt (I) wird eine Kunststofflinse bereitgestellt, welche im Rahmen des vorgeschlagenen Verfahrens zur Herstellung einer funktionell beschichteten Kunststofflinse mit einer funktionellen Beschichtung versehen wird. Hierunter wird insbesondere ein Bereitstellen der zu beschichtenden Kunststofflinse verstanden, welches das Einlegen in eine dafür vorgesehene Vorrichtung umfasst. Typischerweise weist eine solche Vorrichtung zumindest eine Prozesskammer auf, in welcher eine darin bereitgestellte Kunststofflinse mit einer funktionellen Beschichtung versehen werden kann, d.h. in welcher insbesondere ein für den Prozess notwendiger Druck und/oder notwendige Temperatur eingestellt und gegebenenfalls konstant gehalten werden kann. Daher ist die Prozesskammer bevorzugt schliessbar, insbesondere hermetisch verschliessbar. Vorteilhafterweise umfasst das Bereitstellen auch das Einlegen in eine entsprechende Halteeinrichtung, wodurch die Kunststofflinse in der Prozesskammer einer solchen Vorrichtung während des Beschichtungsvorgangs fest und unbeweglich gehaltert ist.

In einem nächsten Schritt (II) wird eine gasförmige Phase einer ersten Präkursvorverbindung A bereitgestellt. Das Bereitstellen kann bevorzugt ein Einlassen einer gasförmigen Phase der ersten Präkursorverbindung A in die Prozesskammer der Vorrichtung meinen. Die Präkursorverbindung A adsorbiert an der Kunststofflinse, insbesondere an zumindest einer Oberfläche der Kunststofflinse, und auf diese Weise wird eine Kunststofflinse mit zumindest einer modifizierten Oberfläche erhalten. Es wird angestrebt, eine bedeckende Adsorption der Präkursorverbindung A auf der Oberfläche der Kunststofflinse zu erhalten, d.h. mit anderen Worten, dass die Präkursorverbindung auf der gesamten Oberfläche der Kunststofflinse im Wesentlichen lückenlos adsorbiert, um in einem späteren Schritt eine lückenlose Monolage, gebildet als Reaktionsprodukt aus der Reaktion der Präkursorverbindung A mit einer zweiten Präkursorverbindung zu erhalten. Der Begriff "bedeckend" bzw. "lückenlos" bedeutet hierbei bevorzugt, dass die Oberfläche der Kunststofflinse zu mehr als etwa 90%, weiter bevorzugt zu mehr als 95%, insbesondere mehr als etwa 99% oder vollständig zu 100% durch die Präkursorverbindung A mit zumindest einer atomaren bzw. molekularen Lage bedeckt ist.

In einem nächsten Schritt (III) findet ein Entfernen von überschüssigem, nicht an der modifizierten Oberfläche der Kunststofflinse anhaftendem bzw. adsorbiertem Material der Präkursorverbindung A statt. Unter einem Entfernen von überschüssigem Material der Präkursorverbindung A kann insbesondere ein Abpumpen bzw. Absaugen des in einer Prozesskammer befindlichen Restgases der gasförmigen Phase der Präkursorverbindung A verstanden werden. Alternativ oder zusätzlich kann dies auch ein Spülen umfassen, insbesondere ein Spülen mit einer dafür geeigneten Lösung und/oder Verbindung, worunter insbesondere jedes Gas und/oder jede Lösung und/oder Verbindung verstanden wird, welches bzw. welche weder eine Reaktion mit der Präkursorverbindung A noch mit der modifizierten Oberfläche der Kunststofflinse eingeht. Je nach Wahl der eingesetzten Präkursorverbindung eignet sich hierfür besonders ein Inertgas als Spülgas, wie beispielsweise Stickstoff oder eines der Edelgase. Eine Kombination aus Abpumpen bzw. Absaugen mit anschließendem Spülen ist besonders dann vorteilhaft, wenn das Verfahren nicht unter Vakuumbedingungen, sondern zum Beispiel bei atmosphärischen Druckbedingungen, stattfinden soll, da hier sonst durch das Abpumpen bzw. Absaugen ein ungewollter Unterdruck entstehen könnte.

Die Zeit bzw. Zeitspanne, während derer eine Präkursorverbindung in der Prozesskammer bereitgestellt ist bzw. wird, wird als Verweildauer bezeichnet. Ein anderer Begriff hierfür ist auch die Expositionszeit bzw. -dauer. Mit anderen Worten ist die Verweildauer jene Zeitspanne, welche begonnen wird mit dem Beginnen des Einlassens (bzw. Bereitstellens) der Präkursorverbindung in die (bzw. der) Prozesskammer, und welche beendet wird mit dem vollständigen Entfernen der Präkursorverbindung aus der Prozesskammer. Während der Verweildauer befindet sich also ein nicht vernachlässigbares Volumen einer gasförmigen Phase einer Präkursorverbindung in der Prozesskammer und kann eine Reaktion eingehen, wobei es sich hierbei um eine Adsorption einer ersten Präkursorverbindung an einer Oberfläche der Kunststofflinse oder um das Eintreten einer Reaktion einer zweiten Präkursorverbindung mit einer, an einer Oberfläche der Kunststofflinse, adsorbierten, ersten Präkursorverbindung handeln kann, welche dann zum Erhalt einer Monolage einer funktionellen Schicht führt.

In einem nächsten Schritt (IV) wird eine gasförmige Phase einer zweiten Präkursorverbindung B bereitgestellt. Das Bereitstellen kann bevorzugt ein Einlassen einer gasförmigen Phase der zweiten Präkursorverbindung B in eine Prozesskammer einer Vorrichtung meinen. Die bereitgestellte Präkursorverbindung B reagiert mit der modifizierten Oberfläche der Kunststofflinse bzw. die bereitgestellte Präkursorverbindung B geht eine Reaktion mit der, an der modifizierten Oberfläche der Kunststofflinse adsorbierten, ersten Präkursorverbindung A ein.

Als Produkt der Reaktion aus den Präkursorverbindungen A und B bildet sich auf der Oberfläche der Linse eine (erste) Monolage der funktionellen Schicht. Mit anderen Worten wird eine Monolage der funktionellen Schicht auf der Oberfläche der Kunststofflinse als Produkt der Reaktion der beiden Präkursorverbindungen A und B gebildet bzw. ausgebildet, d.h. eine Monolage der funktionellen Schicht entsteht als Reaktion der Präkursorverbindungen A und B. Die funktionelle Schicht weist bevorzugt in etwa den gleichen Bedeckungsgrad auf, wie die Präkursorverbindung A. Durch eine nicht vollständige Reaktion zwischen den Präkursorverbindungen A und B kann der Bedeckungsgrad der funktionellen Schicht jedoch kleiner ausfallen, d.h. "bedeckend" bedeutet hierbei bevorzugt, dass die Oberfläche der Kunststofflinse zu mehr als etwa 85%, weiter bevorzugt zu mehr als 90%, insbesondere mehr als etwa 95% oder 99% oder vollständig zu 100% durch die funktionelle Beschichtung mit zumindest einer atomaren bzw. molekularen Lage bedeckt ist.

In einem nächsten Schritt (V) findet ein Entfernen von überschüssigem Material der Präkursorverbindung B statt. Hierunter wird verstanden, dass Material der Präkursorverbindung B entfernt wird, welches überschüssig und ungebunden ist, d.h. welches keine Reaktion mit der, an der Oberfläche der Kunststofflinse adsorbierten, Präkursorverbindung A eingegangen ist. Unter einem Entfernen von überschüssigem Material der Präkursorverbindung B kann insbesondere ein Abpumpen bzw. Absaugen des in einer Prozesskammer befindlichen Restgases der gasförmigen Phase der Präkursorverbindung B verstanden werden. Alternativ oder zusätzlich kann dies auch ein Spülen umfassen, insbesondere ein Spülen mit einer dafür geeigneten Lösung und/oder Verbindung, worunter insbesondere jedes Gas und/oder jede Lösung und/oder Verbindung verstanden wird, welches bzw. welche weder eine Reaktion mit der Präkursorverbindung B noch mit der modifizierten Oberfläche der Kunststofflinse eingeht, und insbesondere die durch Reaktion der beiden Präkursorverbindungen A und B gebildete Monolage der funktionellen Schicht nicht beeinflusst bzw. keine Reaktion mit dieser eingeht. Je nach Wahl der eingesetzten Präkursorverbindung eignet sich hierfür besonders ein Inertgas als Spülgas, wie beispielsweise Stickstoff oder eines der Edelgase. Eine Kombination aus Abpumpen bzw. Absaugen mit anschließendem Spülen ist besonders dann vorteilhaft, wenn das Verfahren nicht unter Vakuumbedingungen, sondern zum Beispiel bei atmosphärischen Druckbedingungen, stattfinden soll, da hier sonst durch das Abpumpen bzw. Absaugen ein ungewollter Unterdruck entstehen könnte.

In einem letzten Schritt (VI) wird eine funktionell beschichtete Kunststofflinse erhalten. Hierunter wird verstanden, dass eine funktionell beschichtete Kunststofflinse als Ergebnis des Verfahrens erhalten wird, welche eine funktionelle Beschichtung aufweist, die zumindest eine Monolage einer funktionellen Schicht aufweist und als Folge dessen funktionelle Eigenschaften besitzt, wie beispielsweise hydrophobe und/oder oleophobe Eigenschaften. Typischerweise umfasst dieser Schritt das Entnehmen der mit einer funktionellen Beschichtung versehenen Kunststofflinse aus der Prozesskammer der Vorrichtung, in welcher das Verfahren durchgeführt wurde.

Das Verfahren findet vorzugsweise bei niedrigen Temperaturen von kleiner oder gleich 100 °C, bevorzugt kleiner oder gleich 75 °C, besonders bevorzugt kleiner oder gleich 50 °C statt. Durch Sicherstellen von solchen Temperaturen in der Prozesskammer und für die mit einer funktionellen Beschichtung zu versehende Kunststofflinse ist es vorteilhafterweise möglich, dass insbesondere Kunststofflinsen mit einer funktionellen Beschichtung gemäß einem solchen Atomic-Layer-Deposition Verfahren versehen werden können, da Kunststofflinsen bekanntlich eine niedrige Wärmebeständigkeit als beispielsweise Mineralgläser oder Halbleiter aufweisen. Insbesondere die bevorzugten Kunststoffmaterialien für Kunststofflinsen verlieren bereits bei Temperaturen von über 100 °C, insbesondere bei Temperaturen von 150 °C oder mehr, ihre mechanische Festigkeit und daher können herkömmliche Atomic-Layer-Deposition Verfahren, welche zumeist bei deutlich höheren Temperaturen stattfinden, auf solche Kunststofflinsen nicht übertragen werden.

Vorzugsweise weist die Kunststofflinse ein Substrat auf, dessen Kunststoffglas im Wesentlichen aus Poly(thio)urethan, Polymethylmethacrylat, Polymethylacrylat, Polycarbonat, Polyacrylat oder Polydiethylenglycolbisallylcarbonat gebildet ist. Vorteilhafterweise können damit insbesondere Kunststoffbrillengläser, welche im Wesentlichen aus diesen Materialien hergestellt sind, mittels des Verfahrens mit einer funktionellen Beschichtung versehen werden.

Vorzugsweise weist die Kunststofflinse zumindest eine Oberfläche auf, auf welcher eine Siliziumoxidschicht mittelbar oder unmittelbar angeordnet ist. Die Siliziumoxidschicht ist dabei nicht darauf beschränkt, ausschließlich aus Siliziumoxid gebildet zu sein, d.h. auch organische Verbindungen aufweisend Siliziumoxid, wie beispielsweise Siloxan-haltige Verbindungen, können eine solche Siliziumoxidschicht darstellen. Eine solche Siliziumoxidschicht kann auch aus einer Silan-Verbindung hergestellt werden, welche beispielweise in Kombination mit Sauerstoff ebenfalls eine Siliziumoxidschicht ausbilden kann. Es ist aus dem Stand der Technik bekannt, dass die Anbindung von funktionellen Molekülen einer funktionellen Beschichtung auf einer solchen Siliziumoxidschicht insbesondere durch eine Kondensationsreaktion der funktionellen Moleküle über ausgebildete OH-Gruppen der Siliziumoxidschicht stattfindet. Vorteilhafterweise weist zumindest eine Oberfläche der Kunststofflinse, insbesondere jene Oberfläche, auf welcher die funktionelle Beschichtung hergestellt werden soll, eine Siliziumoxidschicht als so zusagende Haftschicht bzw. Haftvermittler auf. In einem solchen Fall findet das Herstellen der funktionellen Beschichtung bevorzugt auf jener Oberfläche der Kunststofflinse statt, welche eine Siliziumoxidschicht aufweist. Beispielsweise durch Plasmaaktivierung, d.h. durch Behandlung der Siliziumoxidschicht mit einem geeigneten Plasma, können OH-Gruppen gebildet werden, über welche die Ankergruppen der funktionellen Moleküle einer geeigneten funktionellen Beschichtung eine Verbindung eingehen können. Bevorzugt weist die Kunststofflinse auf ihren beiden Oberflächen eine Siliziumoxidschicht auf. Besonders bevorzugt kann eine solche Kunststofflinse dadurch mittels des Verfahrens beidseitig, d.h. auf beiden Oberflächen der Kunststofflinse, bevorzugt in einem einzigen Verfahrensturnus, mit einer funktionellen Beschichtung versehen werden und beide Oberflächen weisen eine Siliziumoxidschicht als Haftvermittler bzw. Haftschicht auf. Bevorzugt ist die Siliziumoxidschicht im Wesentlichen gebildet aus Siliziumoxid, besonders bevorzugt gebildet aus im Wesentlichen Siliziumdioxid.

Vorzugsweise ist die Siliziumoxidschicht als Substrat-fernste, äußerste Einzelschicht Teil eines mehrschichtigen, insbesondere interferometrischen, Schichtsystems realisiert. Vergütungsbeschichtungen von Kunststofflinsen weisen typischerweise als letzte bzw. äußerste Schicht eine Siliziumoxidschicht auf. Auf diese Weise ist es nicht erforderlich, eine zusätzliche Siliziumoxidschicht als Haftschicht bzw. Haftvermittler zur funktionellen Beschichtung eigens aufzubringen, sondern durch Plasmaaktivierung der bereits auf der Kunststofflinse vorhandenen Siliziumoxidschicht, d.h. durch Behandlung der Siliziumoxidschicht mit einem geeigneten Plasma, können OH-Gruppen gebildet werden, über welche die Ankergruppen der funktionellen Moleküle einer geeigneten funktionellen Beschichtung eine Verbindung eingehen können. Bevorzugt ist die Siliziumoxidschicht als Substrat-fernste, äußerste Einzelschicht eine Siliziumdioxidschicht.

Die ausgebildete funktionelle Beschichtung verleiht der Kunststofflinse hydrophobe und/oder oleophobe Eigenschaften. Ein Maß hierfür ist der jeweilige Kontaktwinkel, den eine entsprechende Flüssigkeit auf der Oberfläche des Brillenglases ausbildet. Hierbei gilt im Allgemeinen, dass die oleophoben und/oder hydrophoben Eigenschaften umso ausgeprägter sind, je größer der Kontaktwinkel der jeweiligen Flüssigkeit auf der Oberfläche des Brillenglases ist. Bevorzugt weist eine mit einer funktionellen Beschichtung versehene Kunststofflinse einen Kontaktwinkel gegenüber H₂O von größer oder gleich 90°, bevorzugt größer oder gleich 100°, und/oder einen Kontaktwinkel gegenüber Hexadecan (C₁₆H₃₄) von größer oder gleich 30°. Damit verleiht eine solche funktionelle Beschichtung der Kunststofflinse eine sehr gute Abweisung von Wassertropfen und Schmutz.

Vorzugsweise wird die funktionelle Beschichtung als Substrat-fernste, äußerste, Oberflächen-nächste Beschichtung auf der Kunststofflinse ausgebildet. Vorteilhafterweise lassen sich hierdurch sehr gute hydrophobe und/oder oleophobe Eigenschaften für die Kunststofflinse erzielen. Insbesondere in Weiterbildung mit einer unmittelbar darunter befindlichen, Siliziumoxidschicht, welche vor Aufbringen der funktionellen Beschichtung die äußerste Schicht darstellte, lassen sich besonders gute hydrophobe und/oder oleophobe Eigenschaften erhalten.

Bevorzugt wird nach der funktionellen Beschichtung keine weitere Beschichtung auf der Kunststofflinse ausgebildet. Dies ist einerseits vorteilhaft, da aufgrund der geringen Oberflächenenergie der ausgebildeten funktionellen Beschichtung eine Anhaftung einer weiteren Schicht bzw. Beschichtung erschwert wird und andererseits, da sich die hydrophoben und/oder oleophoben Eigenschaften nur dann positiv auf die Alltagstauglichkeit der Kunststofflinse im Sinne einer verbesserten Putzbarkeit und einer verringerten Neigung gegenüber der Anhaftung von Wassertropfen und Schmutz auswirken können, wenn die funktionelle Beschichtung, welche der Kunststofflinse diese Eigenschaften verleiht, als Substrat-fernste, äußerste, Oberflächen-nächste Beschichtung auf der Kunststofflinse ausgebildet ist. Mit anderen Worten gesagt, stellt die mit diesem Verfahren ausgebildete funktionelle Beschichtung die äußerste bzw. letzte bzw. abschließende Schicht bzw. Lage der Kunststofflinse dar und ist bevorzugt als einzige Schicht bzw. Lage der Kunststofflinse direkt den Umgebungs- und Umwelteinflüssen ausgesetzt.

Vorzugsweise herrscht in einem, oder es herrschen in zwei, oder in mehreren, oder in allen, der Schritte (I) bis (VI) zumindest eine oder mehrere der folgenden Bedingungen vor:
- angepasste Druckverhältnisse; und/oder
- angepasste Temperatur; und/oder
- (reaktives) Plasma; und/oder
- Vorhandensein eines Katalysators; und/oder
- angepasste Verweildauer(n) der Präkursorverbindung(en); und/oder
- Bestrahlung mit Laserstrahlung; und/oder
- Bestrahlung mit UV-Strahlung; und/oder
- Beschuss mit energetischen Teilchen; und/oder
- Vorhandensein elektrischer Felder.

Es ist bekannt, dass chemische Reaktionen, wie beispielsweise die angestrebte Reaktion der Präkursorverbindungen A und B zur Ausbildung einer Monolage einer funktionellen Beschichtung, aber auch Vorgänge, wie beispielsweise Adsorptionsvorgänge, insbesondere ein Adsorptionsvorgang wie die Adsorption der ersten Präkursorverbindung A an einer Oberfläche der Kunststofflinse, in der Regel eine Aktivierungsenergie bzw. das Überschreiten einer selbigen erfordern, um stattfinden zu können. Aus diesen Gründen kann es erforderlich sein, dass in einem der Schritte (I) bis (IV), oder in zwei, oder in mehreren oder in allen, Schritten des vorgeschlagenen Verfahrens eine oder mehrere der zuvor genannten Bedingungen vorherrschen.

Insbesondere für das Verfahren, welches bei verhältnismäßig niedriger Temperatur durchgeführt wird, kann es erforderlich sein, wahlweise zusätzliche Energie hinzuzuführen, um die für die Adsorption der Präkursorverbindung A und/oder der Reaktion der Präkursorverbindungen A und B notwendige Aktivierungsenergie zu überkommen, oder wahlweise die Aktivierungsenergie bewusst herabzusetzen auf einen Wert, der bereits durch die vorherrschende Temperatur überschritten werden kann.

Durch Erzeugen bzw. Einstellen von angepassten Druckverhältnissen, worunter einerseits die Druckverhältnisse in der Prozesskammer einer Vorrichtung während der Durchführung eines Verfahrens gemäß einem Aspekt zur Herstellung einer funktionell beschichteten Kunststofflinse verstanden werden, kann das Herstellungsverfahren bei einem Druck ungleich dem atmosphärischen Druck durchgeführt werden, zum Beispiel bei einem Unterdruck von kleiner oder gleich 0,1 mbar oder einem Überdruck von bis zu 1,5 bar. Vorteilhafterweise ändert sich die Aktivierungsenergie für den Adsorptionsvorgang der Präkursorverbindung A und/oder die Aktivierungsenergie der Reaktion der beiden Präkursorverbindungen A und B durch angepasste Druckverhältnisse, wodurch ein Eintreten der gewünschten Reaktion besonders begünstigt wird. Darüber hinaus lässt sich über angepasste Druckverhältnisse auch die gasförmige Bereitstellung der Präkursorverbindungen A und B beeinflussen. Insbesondere für niedrige Temperaturen kann es erforderlich sein, durch Vakuumbedingungen die gasförmige Bereitstellung der der Präkursorverbindungen sicherzustellen.

Beim Einlass der Präkursorverbindungen in den Rezipienten müssen diese in ausreichender Menge vorhanden sein, um das Substrat vollständig zu bedecken. Die Mengen der eingelassenen Präkursorverbindungen lassen sich über den Dampfdruck der Präkursorverbindungen regulieren, d.h. andererseits umfassen angepasste Druckverhältnisse insbesondere auch die gasförmige Bereitstellung der Präkursorverbindungen, insbesondere sowohl in der Prozesskammer der Vorrichtung als auch in einem Reservoir enthaltend die Präkursorverbindung. Bei steigender Temperatur nimmt der Dampfdruck der Substanzen zu. Da jedoch bevorzugt niedrige Temperaturen bei dem vorgeschlagenen Verfahren vorherrschen sollen und die Präkursorverbindungen oftmals in flüssiger Form vorliegen, kann der Phasenübergang von der flüssigen in die gasförmige Phase einer oder beider Präkursorverbindungen A und B beispielsweise mittels angepasster Druckverhältnisse beeinflusst werden. Bei sinkendem Druck kann die Phasengrenze zwischen flüssigem und gasförmigem Zustand überschritten werden. Die Reservoire der Präkursorverbindungen, und/oder auch die Prozesskammer, können daher gezielt einem Unterdruck ausgesetzt werden, insbesondere einem Unterdruck von kleiner oder gleich 10⁻⁵ mbar, bevorzugt einem Unterdruck von kleiner oder gleich 10⁻⁸ mbar, so dass eine oder beide Präkursorverbindungen A und B in gasförmiger Phase bereitgestellt werden können. Zur Erhöhung der Dampfdrücke können die Präkursorverbindungen beispielsweise auch mit einem, oder mehreren, Inertgas(en) als Trägergas(e) versetzt werden. Zum Beispiel können die Druckverhältnisse durch Evakuieren der Prozesskammer und/oder der Reservoire der Präkursorverbindungen über eine geeignete Pumpe oder durch Erzeugen eines Überdrucks über geeignete Kompressionsmethoden beeinflusst werden.

Alternativ (oder zusätzlich) kann durch Beeinflussung der Temperatur, insbesondere der Temperatur in der Prozesskammer oder der mit einer funktionellen Beschichtung zu versehenden Kunststofflinse und/oder der Reservoire der Präkursorverbindungen, das Eintreten der gewünschten Reaktion begünstigt werden. Es ist bekannt, dass Reaktionen häufig thermisch getrieben sind und daher eine Erhöhung der Umgebungstemperatur das Eintreten der gewünschten Reaktion begünstigt. Die Temperatur kann beispielsweise mittels einer elektrischen Heizung beeinflusst, insbesondere erhöht, werden, wobei sicherzustellen ist, dass die Temperatur kleiner oder gleich 100 °C, bevorzugt kleiner oder gleich 75 °C, besonders bevorzugt kleiner oder gleich 50 °C, bleibt.

Alternativ (oder zusätzlich) kann das Vorhandensein eines Plasmas, insbesondere eines reaktiven Plasmas, das Eintreten der gewünschten Reaktion begünstigen. So kann zum Beispiel durch Behandlung mit einem Plasma eine der beiden oder beide Präkursorverbindungen modifiziert werden, um deren Reaktionsbereitschaft zu erhöhen, und/oder es können die Gasteilchen der Präkursorverbindungen über Stöße mit dem Plasma zusätzliche Energie gewinnen, um ausreichend Energie für die Adsorption zu besitzen, und/oder um die Aktivierungsenergie der gewünschten Reaktion zu überwinden.

Alternativ (oder zusätzlich) kann eine Plasmabehandlung erfolgen, worunter verstanden wird, dass insbesondere nach der Bereitstellung der Kunststofflinse eine Behandlung deren Oberfläche mittels Plasmas erfolgt, zum Beispiel zum Ausbilden von OH-Gruppen auf einer auf der Oberfläche der Kunststofflinse angeordneten Siliziumoxidschicht. Typischerweise kann hierfür ein Plasma aus einem Edelgas wie Argon oder Krypton erzeugt werden, wobei auch Kombinationen hieraus oder auch reaktive Kombinationen wie ein Argon-Sauerstoff-Plasma oder ein reines Sauerstoffplasma denkbar wären. Das Plasma kann hierbei aus geladenen Teilchen aber auch zum Teil aus neutralen, jedoch angeregten Teilchen wie angeregtem atomarem Sauerstoff oder angeregtem molekularen Sauerstoff bestehen. Auch kann das Plasma beispielsweise Stickstoff oder Wasserstoff enthalten.

Alternativ (oder zusätzlich) kann durch das Vorhandensein eines Katalysators die Adsorption begünstigt sowie das Zustandekommen der Reaktion der Präkursorverbindungen A und B bzw. das Herabsetzen der Aktivierungsenergie begünstigt werden. Je nach Art und Beschaffenheit der eingesetzten Präkursorverbindungen A und B steht dem Fachmann eine Vielzahl möglicher Katalysatoren zur Verfügung, wobei Katalysatoren wie NH₃ (Ammoniak) oder allgemein reaktive Spezies, wie beispielsweise O₃ (Ozon), bevorzugte Katalysatoren darstellen.

Alternativ (oder zusätzlich) kann über angepasste Verweildauern der Präkursorverbindungen in der Prozesskammer das Eintreten der gewünschten Reaktion begünstigen werden. Da bekannt ist, dass chemische Reaktionen bei niedrigeren Temperaturen vor allem langsamer ablaufen, kann eine angepasste Verweildauer der Präkursorverbindungen in der Prozesskammer, insbesondere eine längere, bevorzugt eine deutlich verlängerte, Verweildauer das Stattfinden der gewünschten Reaktion begünstigen. Typische ALD-Verfahren, insbesondere ALD-Verfahren bei Temperaturen im Bereich von 150 °C bis 300 °C können Verweildauern der Präkursorverbindungen von einigen Sekunden bis 30 Sekunden betragen. Die niedrigeren Temperaturen in diesem Verfahren können es erforderlich werden lassen, die Verweildauern der Präkursorverbindungen in der Prozesskammer deutlich zu verlängern und auf bis zu 6 Stunden je Präkursorverbindung auszudehnen. Bei einer Temperatur von 50 °C kann vorteilhafterweise die Verweildauer einer (oder beider) Präkursorverbindung(en) auf jeweils bis zu 300 min ausgedehnt werden, um durch die verlängerte Verweildauer der Präkursorverbindung in der Prozesskammer ein, insbesondere vollständiges Reagieren der beiden Präkursorverbindungen miteinander bzw. ein vollständiges Adsorbieren der Präkursorverbindung auf zumindest einer Oberfläche der Kunststofflinse sicherzustellen.

Alternativ (oder zusätzlich) kann die erforderliche Energie durch Laserstrahlung bereitgestellt werden. Hierbei wird Laserstrahlung, insbesondere gepulste Laserstrahlung, geeigneter Wellenlänge bzw. Frequenz bereitgestellt, welche von einer der beiden, oder von beiden, Präkursorverbindungen A und B oder von der Oberfläche der Kunststofflinse absorbiert wird. Die Absorption der Laserstrahlung führt zu einem Energiezuwachs, wodurch die Aktivierungsenergie überwunden wird und ein Eintreten der Adsorption und/oder der Reaktion der Präkursorverbindungen A und B begünstigt wird bzw. stattfinden kann. Geeigneterweise ist die Wellenlänge bzw. Frequenz der Laserstrahlung so gewählt, dass diese einer Absorptionsbande einer der beiden oder beider Präkursorverbindungen A und B oder der Oberfläche der Kunststofflinse, insbesondere einer dort angeordneten Siliziumoxidschicht, entspricht. Der Vorteil bei gepulster Laserstrahlung ist, dass erhöhte Temperaturen auch lokal induziert werden können, beispielswiese nur an der Substratoberfläche, so dass die Adsorption einer oder beider Präkursorverbindung(en) und/oder die Reaktion der beiden Präkursorverbindungen zwar begünstigt wird, die Kunststofflinse aber nicht nennenswert aufgeheizt wird.

Alternativ (oder zusätzlich) kann die erforderliche Energie durch UV-Strahlung bereitgestellt werden. Hierbei wird UV-Strahlung bereitgestellt, welche von einer (oder beiden) der beiden Präkursorverbindungen A und B absorbiert wird. Die Absorption der UV-Strahlung führt zu einem Energiezuwachs, wodurch die Aktivierungsenergie überwunden wird und ein Eintreten der Adsorption und/oder der Reaktion der Präkursorverbindungen A und B begünstigt wird bzw. stattfinden kann. Geeigneterweise ist die Wellenlänge bzw. Frequenz der UV-Strahlung so gewählt, dass diese einer Absorptionsbande einer der beiden oder beider Präkursorverbindungen A und B entspricht.

Alternativ (oder zusätzlich) kann die erforderliche Energie durch Beschuss mit energetischen Teilchen bereitgestellt werden. Hierbei kann es sich beispielsweise um Elektronen handeln. Aufgrund von Stößen der Elektronen mit den Präkursorverbindungen A und/oder B können diese angeregt werden, wodurch sie Energie gewinnen. Die Anregung führt zu einem Energiezuwachs, wodurch die Aktivierungsenergie überwunden wird und ein Eintreten der Adsorption und/oder der Reaktion der Präkursorverbindungen A und B begünstigt wird bzw. stattfinden kann. Auch kann der Energiezuwachs durch die Stöße mit den geladenen Teilchen zu einer Temperaturerhöhung führen, wodurch die Aktivierungsenergie überwunden wird und ein Eintreten der Adsorption und/oder der Reaktion der Präkursorverbindungen A und B begünstigt wird bzw. stattfinden kann.

Alternativ (oder zusätzlich) kann die erforderliche Energie auch durch Anlegen elektrischer Felder bereitgestellt werden. Aufgrund der anisotropen chemischen Struktur der funktionellen Moleküle kann durch Anlegen einer elektrischen Spannung eine Ladungsverschiebung induziert werden. Dies kann beispielsweise genutzt werden, um die funktionellen Moleküle in einem elektrischen Feld zu beschleunigen und somit deren Energie zu erhöhen. Auch können elektrische Felder genutzt werden, um eine Ausrichtung der funktionellen Moleküle auf der Oberfläche der Kunststofflinse zu erzeugen, indem das Substrat elektrisch geeignet aufgeladen wird. Eine Ausrichtung beispielsweise der Kopplungsgruppe zur Oberfläche der Kunststofflinse begünstigt die Adsorption.

Auch Kombinationen der zuvor genannten Bedingungen sind denkbar.

Insbesondere eine (reaktive) Plasmabehandlung einer Kunststofflinse, welche eine Siliziumoxidschicht auf zumindest einer Oberfläche aufweist, fördert die Ausbildung von bindungsaffinen bzw. reaktiven OH-Gruppen auf besagter Siliziumoxidschicht. Die gebildeten OH-Gruppen begünstigen aufgrund ihrer Polarität die Adsorption der ersten Präkursorverbindung, ehe, bevorzugt mittels einer Hydrolysereaktion, die Bindung bzw. Reaktion mit einer zweiten Präkursorverbindung stattfindet. Insbesondere die Maßgabe, dass die Herstellung der funktionellen Beschichtung auf einer Kunststofflinse bei niedrigen Temperaturen stattfinden soll, kann es erforderlich machen, dass zusätzliche Energie zum Überwinden der Aktivierungsenergie bereitgestellt werden muss oder die Aktivierungsenergie alternativ herabgesetzt werden muss. Dies wird vorteilhafterweise mit den oberhalb genannten Methoden, insbesondere mit Kombinationen davon, ermöglicht.

Ein Adsorptionsvorgang, wie beispielsweise die Adsorption der Präkursorverbindung A im Verfahrensschritt (II), kann im Allgemeinen einen Energieeintrag zur Überschreitung der Aktivierungsenergie erfordern. Dieser Energieeintrag kann hierbei thermisch und/oder durch Plasma(einwirkung) und/oder durch Lasereinstrahlung und/oder durch UV-Bestrahlung und/oder durch Beschuss mit energetischen Teilchen und/oder durch Vorhandensein eines Katalysators und/oder durch Anlegen elektrischer Felder bereitgestellt werden. Die beschriebenen Energieeinträge können auf die Oberfläche der Kunststofflinse einwirken und/oder auf die Gasteilchen der Präkursorverbindung A einwirken. Bevorzugt wird die Adsorption dadurch begünstig, dass ein Herabsetzen der zum Eintreten der Adsorption erforderlichen Aktivierungsenergie durch Plasmabehandlung einer Siliziumoxidschicht, angeordnet auf der Oberfläche der Kunststofflinse, stattfindet, wodurch bindungsaffine bzw. reaktive OH-Gruppen ausgebildet werden, wodurch die Aktivierungsenergie wirksam herabgesetzt wird.

Ein Reaktionsvorgang, wie insbesondere die Reaktion der Präkursorverbindungen A und B, kann im Allgemeinen einen Energieeintrag zur Überschreitung der Aktivierungsenergie erfordern. Dieser Energieeintrag kann hierbei thermisch und/oder durch Plasma(einwirkung) und/oder durch Lasereinstrahlung und/oder durch UV-Bestrahlung und/oder durch Beschuss mit energetischen Teilchen und/oder durch Vorhandensein eines Katalysators und/oder durch Anlegen elektrischer Felder bereitgestellt werden. Die beschriebenen Energieeinträge können auf die Oberfläche der Kunststofflinse, insbesondere auf die durch Adsorption der Präkursorverbindung A modifizierte Oberfläche der Kunststofflinse, einwirken und/oder auf die Gasteilchen der Präkursorverbindung B einwirken.

Vorzugsweise ist einer der beiden Präkursorverbindungen eine Silan-haltige Verbindung, d.h. einer der beiden Präkursorverbindungen ist eine Silan-Präkursorverbindung. Silan-haltige Verbindungen sind chemische Verbindung, die aus einem Silizium-Grundgerüst, und Wasserstoff oder einem Alkyl- oder einem beliebig wählbaren organischen Rest bestehen. Insbesondere Silan-haltige Verbindungen, welche als Ankergruppe eine oder mehrere Alkoxygruppen oder eine oder mehrere Chlorogruppen aufweisen, wie beispielsweise eine oder mehrere Methoxy-, Ethoxyoder Chlorogruppen, eignen sich hierfür besonders gut. Durch Substitution durch eine OH-Gruppe und über anschließende Reaktion der substituierten OH-Gruppe mit einer OH-Gruppe der Kunststofflinse wird eine Anbindung der Silan-Präkursorverbindung an die Kunststofflinse erzielt. Neben einer oder mehrerer Ankergruppe(n) verfügen geeignete Silan-haltige Verbindungen über eine funktionelle Gruppe, welche in der Regel als langkettige Alkyl- oder Alkyletherkette realisiert ist und die gewünschten wasser- und/oder ölabweisenden Eigenschaften aufweist. Diese Kohlenwasserstoffe der Alkyl- oder Alkyletherkette können dabei per- bzw. polyfluoriert sein oder nicht. Darüber hinaus ist die Wahl einer geeigneten Silan-haltigen Präkursorverbindung nicht weiter eingeschränkt, außer dass sie die oberhalb genannten Eigenschaften erfüllen sollte und einen ausreichend hohen Dampfdruck bei der, während der Beschichtung vorliegenden, Temperatur besitzen sollte, um insbesondere als gasförmige Phase bereitgestellt werden zu können.

Vorzugsweise ist die Silan-Präkursorverbindung im Wesentlichen aus Octadecyltrichlorosilan (ODTS), Hexadecyltrichlorosilan (HDTS), Tetradecyltrichlorosilan (TDTS), Dodecyltrichlorosilan (DTS), Decyltrichlorosilan, Octyltrichlorosilan, Heptadecafluorotetrahydrodecyltrichlrosilan (FDTS) oder Perfluorooctyltrichlorosilan (bzw. auch bezeichnet als Tridecafluorotetrahydrooctyltrichlrosilan, FOTS). Silan-haltige Verbindungen wie die vorstehend genannten Verbindungen zeichnen sich als bevorzugte Präkursorverbindungen zum Ausbilden einer funktionellen Beschichtung aus, welche exzellente hydrophobe und/oder oleophobe Eigenschaften aufweist und durch geeignete Ankergruppen eine hervorragende Anbindung an die Kunststofflinse aufweist. Es können aber auch Silane mit längerer oder kürzerer Alkylkette verwendet werden oder auch können Silane mit vollständiger, teilweise oder nicht perfluorierter Alkylkette verwendet werden.

Bevorzugt eignen sich Silane bzw. Silan-haltige Verbindungen aufweisend eine Alkylkette, insbesondere aufweisend eine Alkylkette der funktionellen Gruppe bzw. Schwanzgruppe, welche mindestens 8 Kohlenstoffatome aufweist, wodurch sich eine solche Verbindung durch sehr gute hydrophobe und/oder oleophobe Eigenschaften auszeichnen. Auch können Methoxy-basierte Silane wie beispielsweise Octadecyltrimethoxysilan (ODTMS), Dodecyltrimethoxysilan (DTMS) oder Hexadecyltrimethoxysilan (HDTMS), oder Ethoxy-basierte Silane wie beispielsweise Octadecyltriethoxysilan, Dodecyltriethoxysilan oder Hexadecyltriethoxysilan, verwendet werden. Diese Aufzählung ist nicht abschließend und ist als beispielhafte Aufführung zu verstehen. Bei den oben genannten Beispielen handelt es sich um lineare Moleküle, die nur über die eine vorhandene Kopplungsgruppe binden, so dass eine im Wesentlichen zweidimensionale Anbindung vorliegt. Es können auch verzweigte oder sogar stark verzweigte Moleküle verwendet werden, mit mehrfachen Kopplungsgruppen, so dass ein höherer Vernetzungsgrad möglich ist.

Vorzugsweise ist eine der beiden Präkursorverbindungen eine Silan-haltige Verbindung, bevorzugt eine der vorstehend genannten Präkursorverbindungen, und die andere Präkursorverbindung ist im Wesentlichen H₂O. Durch Bereitstellen von H₂O als Reaktant bzw. als einer der beiden Präkursorverbindungen wird eine Hydrolysereaktion in Gang gesetzt, durch welche die erste Silan-Präkursorverbindung an die Oberfläche der Kunststofflinse bindet.

Vorzugsweise ist eine der beiden Präkursorverbindungen eine Silan-haltige Verbindung aufweisend zumindest eine, bevorzugt zwei oder mehrere, Kopplungsgruppe(n), wobei diese (zumindest eine) Kopplungsgruppe vorzugsweise hydrolysierbar ist bzw. sind und eine bzw. mehrere Chloro-, Methoxy-, Ethoxy- oder Acetoxygruppe oder ein Amin, ein Silazan oder ein Oxime aufweist bzw. aufweisen. Hierdurch lässt sich eine sehr gute Anbindung der im Präkursorverbindung, insbesondere im Rahmen einer Hydrolysereaktion erzielen, wodurch eine, insbesondere stabil anhaftende, funktionelle Beschichtung ausgebildet wird.

Funktionelle Beschichtungen, aufweisend zumindest eine Monolage einer funktionellen Schicht, gebildet aus Präkursorverbindungen, wovon eine vorzugsweise DTS, HDTS, TDTS, ODTS, FOTS, FDTS, ODTMS, DTMS oder HDTMS ist, zeichnen sich dadurch aus, dass sie einen Kontaktwinkel gegenüber H₂O von größer oder gleich 90° und/oder einen Kontaktwinkel gegenüber Hexadecan (C₁₆H₃₄) von größer oder gleich 30° erzielen können.

Fluorhaltige Silan-Verbindungen ermöglichen den Erhalt verbesserter hydrophobe und/oder oleophobe Eigenschaften. Funktionelle Beschichtungen, aufweisend zumindest eine Monolage einer funktionellen Schicht, gebildet aus Präkursorverbindungen, wovon eine vorzugsweise FOTS oder FDTS ist, zeichnen sich dadurch aus, dass sie einen Kontaktwinkel gegenüber H₂O von größer oder gleich 100° und/oder einen Kontaktwinkel gegenüber Hexadecan (C₁₆H₃₄) von größer oder gleich 60° erzielen können.

Vorzugsweise stellen die Schritte (II) bis (V) einen Zyklus dar, welcher mehrmals bzw. beliebig oft durchgeführt werden kann, d.h. das vorgestellte Verfahren wird um eine Zyklisierung weitergebildet, mit dem Ziel, dass die Schritte (II) bis (V) wiederholt durchgeführt werden. Dieser Zyklus kann zum Beispiel zweimal durchgeführt werden, wobei dann die Abfolge der Verfahrensschritte (II) bis (V), bestehend aus Einlassen einer ersten Präkursorverbindung A, Entfernen der ungebundenen, nicht an der Oberfläche adsorbierten Bestandteile der ersten Präkursorverbindung A, Bereitstellen einer zweiten Präkursorverbindung B und Entfernen der ungebundenen Bestandteile der Präkursorverbindung B, welche keine Reaktion mit der Präkursorverbindung A eingegangen sind, zweimal durchgeführt werden. Dieser Zyklus kann dreimal durchgeführt werden, wobei dann dreimal die Schritte (II) bis (V) durchgeführt werden, usw.. Im Allgemeinen wird dieser Zyklus n-mal durchgeführt, wobei n die Anzahl der Zyklusdurchführungen ist. Bevorzugt ist n eine Zahl zwischen 1 und 100, besonders bevorzugt ist n eine Zahl zwischen 1 und 50. Vorteilhafterweise kann durch wiederholtes Durchführen der Schritte (II) bis (V) eine nahezu lückenlose Bedeckung der, mit einer funktionellen Beschichtung zu versehenden, Oberfläche der Kunststofflinse erreicht werden. Insbesondere in Kombination mit langkettigen Präkursorverbindungen, bevorzugt Silan-haltigen Präkursorverbindungen aufweisend eine langkettige Alkylkette, kann eine solche Zyklisierung von Vorteil sein, da Reaktionsvorgänge, wie beispielsweise die Adsorption der ersten Präkursorverbindung an der Oberfläche der Kunststofflinse und/oder die Reaktion der beiden Präkursorverbindungen unter Ausbildung einer Monolage der funktionellen Schicht, nur stattfinden können, wenn die dafür erforderlichen Reaktionspartner benachbart sind. Reichern sich zum Beispiel Moleküle der ersten Präkursorverbindung auf der Oberfläche der Kunststofflinse an, können aber aufgrund falscher Orientierung bei einem Hydrolyse-Reaktionsschritt keine Bindung zur Oberfläche der Kunststofflinse eingehen, so sind solche Bereiche auf der Oberfläche der Kunststofflinse zwar mit dieser Präkursorverbindung belegt, es kann sich hier jedoch bei Reaktion mit einer zweiten Präkursorverbindung keine anhaftende, d.h. insbesondere keine mit der Oberfläche der Kunststofflinse verbundene, Monolage der funktionellen Schicht ausbilden. Bei einem der Schritte (III) oder (V) würde das nicht angebundene Material entfernt werden, so dass eine nicht vollständig geschlossene Monolage der funktionellen Schicht ausgebildet würde. Durch eine solche Zyklisierung kann sichergestellt werden, dass eine lückenlose Ausbildung der funktionellen Beschichtung erfolgt, mit anderen Worten, dass auf der gesamten, mit einer funktionellen Beschichtung zu versehenden Oberfläche der Kunststofflinse, eine Monolage der funktionellen Schicht ausgebildet wird. Im Allgemeinen kann bei einer solchen Zyklisierung kein zu häufiges Durchführen stattfinden, da auf einer beispielsweise mit der ersten Präkursorverbindung durch lückenlose Adsorption bzw. bei einer vollständig mit einer Monolage der funktionellen Schicht gesättigten Oberfläche keine weitere Anbindung erfolgen kann.

Vorzugsweise ist das Verfahren in Kombination mit einer Zyklisierung gemäß dem vorangegangenen Unteraspekt dahingehend weitergebildet, dass der Zyklus dahingehend erweitert ist, dass als Bestandteil des Zyklus eine Haftschicht ausgebildet bzw. aufgebracht bzw. angeordnet wird. Hierdurch, d.h. durch das Aufbringen einer Haftschicht als Bestandteil des Zyklus wird das Aufbringen mehrerer, aufeinander folgender Monolagen der funktionellen Schicht ermöglicht, da diese Haftschicht eine Quervernetzung ausbildet. Hierdurch kann die Zyklisierung weitergebildet werden und nicht nur zum Ausbilden einer lückenlosen Monolage der funktionellen Schicht angewendet werden, sondern durch die zusätzlich zwischen aufeinander folgenden Monolagen ausgebildeten Haftschichten kann eine funktionelle Beschichtung erhalten werden, welche aus mehreren, aufeinander folgenden Monolagen der funktionellen Schicht besteht und somit verbesserte funktionelle, d.h. insbesondere hydrophobe und/oder oleophobe Eigenschaften aufweist. Hierdurch kann vorteilhafterweise erreicht werden, dass bei einem nächsten Zyklusdurchlauf die erste, bevorzugt Silan-haltige Präkursorverbindung einen Bindungspartner auf der, bereits mit einer (oder mehreren) Monolage(n) einer funktionellen Schicht versehenen, Oberfläche der Kunststofflinse vorfindet, wobei die ausgebildete Haftschicht diesen Bindungspartner darstellt. Insbesondere Silan- und/oder Siloxan-haltige Verbindungen eignen sich bevorzugt zum Ausbilden einer solchen Haftschicht. Ohne Beschränkung hierauf kann eine solche Haftschicht beispielsweise eine Silan-haltige Verbindung, wie Tetramethyldisilan (TMDS) oder Hexamethyldisilan (HMDS) sein, oder eine Siloxan-haltige Verbindung, wie beispielsweise Tetramethyldisiloxane (TMDSO) und/oder Hexamethyldisiloxan (HMDSO) und/oder Polydimethylsiloxan (PDMS) sein. Auch andere Ausführungsformen sind denkbar, insbesondere solche, in denen eine Haftschicht ausgebildet wird, welche aus einer und/oder zwei Verbindungen besteht, wobei diese Verbindungen auf der Oberfläche der Kunststofflinse unter Ausbildung einer solchen Haftschicht reagieren. Ein solcher Zyklus kann, in Weiterbildung mit dem Aufbringen einer Haftschicht, gemäß einem vorangegangen Aspekt n-mal durchgeführt werden, wobei n die Anzahl der Zyklusdurchführungen ist, d.h. mittels eines solchen Verfahrens kann eine Kunststofflinse erhalten werden, welche eine funktionelle Beschichtung aufweist, wobei diese funktionelle Beschichtung n Monolagen einer funktionellen Schicht aufweist, wobei zwischen diesen n aufeinander folgenden Monolagen jeweils eine Haftschicht ausgebildet ist. Gemäß dem vorangegangenen Aspekt ist n bevorzugt eine Zahl zwischen 1 und 100, besonders bevorzugt ist n eine Zahl zwischen 1 und 50.

Ein weiterer Aspekt betrifft eine Herstellungsvorrichtung zur Herstellung von funktionell beschichteten Kunststofflinsen, insbesondere Kunststoffbrillengläsern. Die Herstellungsvorrichtung weist eine Prozesskammer (auch Rezipient genannt), sowie darin angeordnet eine Halteeinrichtung zur Aufnahme mindestens einer Kunststofflinse, sowie verbunden mit der Prozesskammer mindestens eine Bereitstellungseinrichtung für eine Präkursorverbindung und ebenfalls verbunden mit der Prozesskammer eine Entfernungseinrichtung auf. Bevorzugt ist die Vorrichtung geeignet, ein Verfahren gemäß einem Aspekt durchzuführen.

Die Prozesskammer ist nicht weiter eingeschränkt, außer dass sie aus einem gegenüber vielen Stoffen widerstandsfähigen und beständigem Material gebildet sein sollte, vorzugsweise aus Edelstahl. Je nach Größe der Vorrichtung ist eine kleine Prozesskammer denkbar, in welcher eine Halteeinrichtung angeordnet ist, die eine Kunststofflinse aufnehmen kann, oder eine deutlich größere Prozesskammer, in welcher eine Vielzahl von Kunststofflinsen auf der darin befindlichen Halteeinrichtung angeordnet und zeitgleich funktionell beschichtet werden können, um eine besonders wirtschaftliche Herstellung von funktionell beschichteten Kunststofflinsen ermöglichen zu können.

Die Halteeinrichtung ist ebenfalls nicht weiter eingeschränkt, außer dass sie eine geeignete Aufnahme für zumindest eine Kunststofflinse aufweisen muss. Ein Haltering aus Edelstahl, welcher in seinen Abmessungen geringfügig größer ist als eine funktionell beschichtende Kunststofflinse, um diese derart während des Herstellungsverfahrens festzuhalten, ist eine bevorzugte Halteeinrichtung. Alternativen hierzu oder Weiterbildungen, zum Beispiel eine Halteeinrichtung für eine Vielzahl von funktionell zu beschichtenden Kunststofflinsen sind ebenfalls denkbar wie auch entsprechende Halteeinrichtungen, welche eine funktionell zu beschichtende Kunststofflinse derart halten, dass insbesondere die beiden Oberfläche der Kunststofflinse frei zugänglich und nicht verdeckt sind, um eine Ablagerung einer funktionellen Schicht auf beiden Oberflächen gleichzeitig zu ermöglichen, sind ebenfalls denkbar.

Die Bereitstellungseinrichtung ist eine mit der Prozesskammer verbundene Einrichtung, welche eine Präkursorverbindung bereitstellt, worunter verstanden wird, dass die Bereitstellungseinrichtung eine Präkursorverbindung in die Prozesskammer der Anlage einlassen bzw. hineinbefördern kann. Eine bevorzugte Bereitstellungseinrichtung ist ein Reservoir, bevorzugt eine Druckgasflasche, enthaltend die Präkursorverbindung in gasförmiger Phase, angeschlossen über eine Leitung mit einem regelbaren Ventil, welches mit der Prozesskammer verbunden ist. Alternativen hierzu, zum Beispiel auch ein Behältnis enthaltend die Präkursorverbindung in flüssiger oder gar fester Phase wäre ebenfalls denkbar. In einem solchen Fall würde die Bereitstellungseinrichtung dann vor dem Bereitstellen in der Prozesskammer zuerst eine Erwärmung, wahlweise thermisch oder durch Komprimieren durchführen, um die flüssige bzw. feste Phase in eine gasförmige Phase zu überführen. Vorteilhafterweise kann hierdurch die Prozesskammer auf einfache Weise mit einer Präkursorverbindung befüllt bzw. geflutet werden. Alternativ kann die Präkursorverbindung in dem Reservoir auch in flüssiger Form vorliegen, wobei bei ausreichend hohem Dampfdruck ein Teil der Präkursorverbindung in die gasförmige Phase übergeht. Diese gasförmige Phase kann dann mittels eines inerten Trägergases, wie beispielsweise Argon oder Stickstoff, in den Rezipienten befördert werden.

Die Entfernungseinrichtung ist eine mit der Prozesskammer verbundene Einrichtung, welche eine in der Prozesskammer befindliche, gasförmige Phase einer Präkursorverbindung entfernen kann. Eine handelsübliche Vakuumpumpe, angeschlossen an die Prozesskammer über ein regelbares Ventil, bevorzugt ein Plattenventil, ist eine bevorzugte Entfernungseinrichtung. Vorteilhafterweise kann hierdurch die Prozesskammer von einer darin befindlichen Präkursorverbindung gereinigt werden, zum Beispiel durch Abpumpen bzw. Absaugen. Ebenfalls denkbar ist, dass die Entfernungseinrichtung für das Abpumpen bzw. Absaugen bzw. Befördern beliebiger Gase geeignet ist und somit auch verwendet werden kann, um durch gezieltes Evakuieren die Druckverhältnisse in der Prozesskammer zu steuern, zum Beispiel um bewusst einen Unterdruck herbeizuführen.

Vorzugsweise weist die Vorrichtung noch zusätzliche Komponenten auf, wie beispielsweise eine elektrische Heizung zur Beeinflussung der Temperaturverhältnisse, eine Bereitstellungseinrichtung für einen Katalysator, eine Plasmabehandlungseinrichtung zur Bereitstellung eines (reaktiven) Plasmas, und/oder eine Laserbestrahlungseinrichtung zur Bereitstellung von Lasterstrahlung und/oder eine UV-Bestrahlungseinrichtung zur Bereitstellung von UV-Strahlung und/oder eine Bereitstellungseinrichtung zur Bereitstellung von energetischen Teilchen und/oder eine Bereitstellungseinrichtung zur Bereitstellung von elektrischen Feldern. Diese zusätzlichen Komponenten können einzeln oder in Kombination vorhanden sein, um auf diese Weise innerhalb der Vorrichtung vorteilhafterweise auch Verfahren gemäß einer bevorzugten Ausführungsform eines Aspekts durchführen zu können, in welchen zusätzliche Energie bereitgestellt werden muss, um die Adsorption der Präkursorverbindungen und/oder ein Eintreten einer Reaktion aus zwei Präkursorverbindungen zu begünstigen.

Vorzugsweise weist die Vorrichtung zusätzlich noch eine Steuerungseinrichtung auf, welche verbunden mit den Komponenten der Vorrichtung ist und auf diese Weise in der Lage ist, diese zu steuern bzw. zu regeln. Vorteilhafterweise kann so, nach Einprogrammieren einer Steuerungsabfolge für ein Herstellungsverfahren gemäß einem vorangegangenen Aspekt eine automatische Durchführung eines solchen Verfahrens stattfinden.

Ein weiterer Aspekt betrifft ein Verfahren zum Betreiben einer Herstellungsvorrichtung zur Herstellung von funktionell beschichteten Kunststofflinsen, insbesondere Kunststoffbrillengläsern, wobei das Herstellungsverfahren und die Herstellungsvorrichtung gemäß den bereits vorgestellten Aspekten ausgeprägt sind.

Das Verfahren zum Betreiben umfasst ein Einstellen von Steuerparametern, insbesondere von Einstellgrößen bzw. Einstellwerten für bzw. von Komponenten der Herstellungsvorrichtung gemäß einem vorangegangenen Aspekt, wobei die Herstellungsvorrichtung zusätzlich eine Steuerungseinrichtung aufweist. Durch Einprogrammieren entsprechender Werte bzw. Prozessparameter an der Steuerungseinrichtung wird diese in einen Zustand versetzt, in dem sie die Herstellungsvorrichtung automatisiert steuern kann und dabei automatisiert ein Verfahren zur Herstellung von funktionell beschichteten Kunststofflinsen gemäß einem vorangegangenen Aspekt durchführt. Vorteilhafterweise erfolgt dieses Einstellen einmalig und anschließend kann die Steuerungseinrichtung automatisiert die Herstellungsvorrichtung zur Durchführung eines solchen Herstellungsverfahren steuern.

Vorzugsweise ist das Verfahren dahingehend weitergebildet, dass nach einem erfolgten Verfahrensturnus, welcher zumindest das Herstellen von mindestens einer funktionell beschichteten Kunststofflinse umfasst, ein Vermessen der funktionellen Eigenschaften der hergestellten, funktionell beschichteten Kunststofflinse erfolgt. Insbesondere wenn eine (oder mehrere) Abweichung(en) zu vorgegebenen akzeptierten Qualitätsziel(en) vorliegen, findet eine Anpassung der an der Steuerungseinrichtung einprogrammierten Werte bzw. Prozessparameter statt. Durch geeignetes Anpassen der Prozessparameter kann die bestimmte Abweichung gezielt korrigiert werden und für einen darauffolgenden Verfahrensturnus, welcher zumindest die Herstellung einer weiteren, mit einer funktionellen Beschichtung versehenen Kunststofflinse umfasst, kann sichergestellt werden, dass nach erfolgter Bestimmung der funktionellen Eigenschaften der Kunststofflinse, dass deren Eigenschaften wieder innerhalb der vorgegebenen Qualitätsziele liegen. Auf diese Weise kann vorteilhafterweise ein rückgekoppeltes Verfahren bereitgestellt werden, bei dem über die kontinuierliche Überwachung von Qualitätszielen eine etwaige Abweichung detektiert und für einen darauffolgenden Verfahrensturnus in geeigneter Weise kompensiert werden kann. Hierdurch wird insbesondere ein Verfahren zum Betreiben einer Herstellungsvorrichtung zur Herstellung von funktionell beschichteten Kunststofflinsen vorgeschlagen, welches rückgekoppelt ist, mit anderen Worten regelbar zum Erzielen einer konstanten Qualität unter Einhaltung bzw. Erfüllung von vorgegebenen Qualitätszielen für funktionell beschichteten Kunststofflinsen.

Ein weiterer Aspekt betrifft eine funktionelle beschichtete Kunststofflinse, insbesondere Kunststoffbrillenglas, welche aus einem Substrat aus einem Kunststoffglas besteht und auf zumindest einer Oberfläche zumindest eine Monolage einer funktionellen Schicht aufweist.

Eine Kunststofflinse ist ein optischer Gegenstand, aufweisend ein Substrat gebildet aus einem Kunststoffglas, wobei das Kunststoffglas bevorzugt im Wesentlichen aus Poly(thio)urethan, Polymethylmethacrylat, Polymethylacrylat, Polycarbonat, Polyacrylat oder Polydiethylenglycolbisallylcarbonat gebildet ist. Auch Kombinationen hiervon, sowie andere Kunststoffmaterialien für das Kunststoffglas sind denkbar, solange sie im Wesentlichen transparent sind und/oder optische Eigenschaften aufweisen, welche sie als Kunststoffglas für eine Linse tauglich machen. Eine Kunststofflinse weist im Allgemeinen zwei Flächen bzw. Oberflächen auf, von denen eine oder beide einen Krümmungsradius aufweisen können, insbesondere auch einen sich unterscheidenden Krümmungsradius, welcher der Linse eine optische Brechkraft verleiht. Eine solche Kunststofflinse kann ein Linsenfertigprodukt sein, d.h. eine Linse, bei der beide Oberflächen bereits fertig bearbeitet sind, worunter verstanden wird, dass beide Oberflächen bereits die gewünschten optischen Eigenschaften besitzen. Die Linse kann aber auch ein Halbfertigprodukt oder Halbfertigerzeugnis sein, bei welchem nur eine der beiden Oberflächen bereits die gewünschte optische Eigenschaft aufweist und die andere Oberfläche noch unbearbeitet ist, d.h. noch nicht die gewünschte optische Eigenschaft aufweist. Kunststofflinsen im Sinne der Erfindung können vorteilhafterweise, neben der/den optische/n Eigenschaft/en, auch zusätzliche Veredelungen besitzen. Hierunter sind alle, dem Fachmann geläufigen, Veredelungen zu verstehen, wozu insbesondere zusätzlich aufgebrachte Beschichtungen und/oder Lackierungen zählen. Beispiele für typische Lackierungen wären Pufferlackschichten zur Erhöhung der Bruchfestigkeit und/oder Hartlackschichten zur Erhöhung bzw. Verbesserung der mechanischen Beständigkeit, insbesondere der Kratzfestigkeit.

Beispiele für typische Beschichtungen sind Verspiegelungen und/oder Entspiegelungen, insbesondere Antireflexbeschichtungen. Letztere verleihen der Kunststofflinse ein vermindertes Reflexionsvermögen und Unterdrücken auf diese Weise ungewollte Reflexionen. Mit anderen Worten versteht sich im Sinne der Erfindung unter einer Kunststofflinse ein beliebiger Rohling oder auch eine bereits bearbeitete Linse, insbesondere auch eine bereits bearbeitete und vergütete Linse.

Die Kunststofflinse weist eine funktionelle Beschichtung auf bzw. ist mit einer funktionellen Beschichtung versehen, d.h. mit anderen Worten ist auf zumindest einer Oberfläche der Kunststofflinse eine funktionelle Beschichtung angeordnet. Diese funktionelle Beschichtung besteht aus zumindest einer, insbesondere genau einer, Monolage einer funktionellen Schicht, wobei die funktionelle Schicht aus entsprechenden funktionellen Molekülen gebildet ist, welche der funktionellen Schicht, und damit der funktionellen Beschichtung, und folglich der, mit der funktionellen Beschichtung versehenen, Kunststofflinse zusätzliche, insbesondere funktionelle Eigenschaften verleihen.

Unter solchen funktionellen Eigenschaften kann insbesondere eine Abweisung gegenüber Wassertropfen und Schmutz verstanden werden.

Die funktionelle Beschichtung weist hierbei zumindest eine, bevorzugt genau eine, Monolage einer funktionellen Schicht auf, wobei diese Monolage derart bedeckend, mit anderen Worten lückenlos, auf der Oberfläche der Kunststofflinse ausgebildet ist, dass die funktionellen Eigenschaften auf der gesamten Oberfläche der Kunststofflinse vorliegen, d.h. die funktionellen Eigenschaften liegen uniform auf der Oberfläche der Kunststofflinse vor und es gibt insbesondere keine Bereiche auf der Oberfläche der Kunststofflinse, welche sich hinsichtlich der vorliegenden, funktionellen Eigenschaften unterscheiden. Die lückenlose Ausbildung der Monolage der funktionellen Schicht verleiht der Kunststofflinse exzellenten funktionellen Eigenschaften, wobei diese bereits durch das Vorhandensein einer Monolage vorteilhafterweise ausgebildet sind.

Vorzugsweise weist die funktionell beschichtete Kunststofflinse mehr als nur eine Monolage der funktionellen Schicht auf, insbesondere 1 bis 100 Monolagen, bevorzugt 1 bis 50 Monolagen. Vorteilhafterweise können sich die Eigenschaften der funktionellen Beschichtung verbessern durch eine Vielzahl von sukzessive nacheinander aufgebrachter Monolagen der funktionellen Schicht.

Vorzugsweise ist das Kunststoffglas des Substrats der Kunststofflinse im Wesentlichen aus Poly(thio)urethan, Polymethylmethacrylat, Polymethylacrylat, Polycarbonat, Polyacrylat oder Polydiethylenglycolbisallylcarbonat gebildet. Hierbei handelt es sich um typische und geläufige Materialien für Kunststoffgläser, welche sich vorteilhafterweise durch exzellente optische Eigenschaften in Kombination mit einem, insbesondere in Vergleich zu Mineralglas vergleichsweise, geringen Gewicht auszeichnen.

Vorzugsweise verleiht die funktionelle Schicht der Kunststofflinse hydrophobe und/oder oleophobe Eigenschaften, insbesondere einen Kontaktwinkel gegenüber H₂O von größer oder gleich 90°, bevorzugt größer oder gleich 100°, und/oder einen Kontaktwinkel gegenüber Hexadecan (C₁₆H₃₄) von größer oder gleich 30°, bevorzugt größer oder gleich 60°. Hierdurch weist die funktionell beschichtete Kunststofflinse günstigerweise eine sehr gute Abweisung von Wassertropfen und Schmutz auf.

Vorzugsweise weist die Kunststofflinse zumindest eine Siliziumoxidschicht auf, welche mittelbar oder unmittelbar auf einer Oberfläche der Kunststofflinse angeordnet ist. Vorteilhafterweise kann hierdurch eine gute Anbindung bzw. Anhaftung der funktionellen Beschichtung an die Kunststofflinse stattfinden, da Siliziumoxid durch geeignete (Vor-)Behandlung, insbesondere durch Plasmabehandlung, zur Ausbildung von bindungsaffinen bzw. reaktiven OH-Gruppen neigt.

Vorzugsweise weist die Kunststofflinse eine Vergütungsbeschichtung auf, insbesondere eine mehrlagige, interferometrische Entspiegelungs- oder Verspiegelungsbeschichtung auf, wobei diese Vergütungsbeschichtung als äußerste Schicht, d.h. als Substrat-fernste Schicht eine Einzelschicht aus Siliziumoxid aufweist. Vorteilhafterweise kann hierdurch eine gute Anbindung bzw. Anhaftung der funktionellen Beschichtung an die Kunststofflinse stattfinden, da Siliziumoxid durch geeignete (Vor-)Behandlung, insbesondere durch Plasmabehandlung, zur Ausbildung von bindungsaffinen OH-Gruppen neigt.

Vorzugsweise weist die funktionell beschichtete Kunststofflinse die funktionelle Beschichtung als Substrat-fernste, äußerste, Oberflächen-nächste Beschichtung auf. Vorteilhafterweise lassen sich hierdurch sehr gute hydrophobe und/oder oleophobe Eigenschaften für die Kunststofflinse erzielen. Insbesondere in Weiterbildung mit einer unmittelbar darunter befindlichen, Siliziumoxidschicht, welche vor Aufbringen der funktionellen Beschichtung die äußerste Schicht darstellte, lassen sich besonders gute hydrophobe und/oder oleophobe Eigenschaften erhalten.

Bevorzugt weist die Kunststofflinse nach der funktionellen Beschichtung keine weitere Beschichtung auf. Dies ist einerseits vorteilhaft, da aufgrund der geringen Oberflächenenergie der ausgebildeten funktionellen Beschichtung eine Anhaftung einer weiteren Schicht bzw. Beschichtung erschwert wird und andererseits, da sich die hydrophoben und/oder oleophoben Eigenschaften nur dann positiv auf die Alltagstauglichkeit der Kunststofflinse im Sinne einer verbesserten Putzbarkeit und einer verringerten Neigung gegenüber der Anhaftung von Verschmutzungen auswirken können, wenn die funktionelle Beschichtung, welche der Kunststofflinse diese Eigenschaften verleiht, als Substrat-fernste, äußerste, Oberflächen-nächste Beschichtung auf der Kunststofflinse ausgebildet ist. Mit anderen Worten gesagt, stellt funktionelle Beschichtung die äußerste bzw. letzte bzw. abschließende Schicht bzw. Lage der Kunststofflinse dar und ist bevorzugt als einzige Schicht bzw. Lage der Kunststofflinse direkt den Umgebungs- und Umwelteinflüssen ausgesetzt.

Vorzugsweise ist die funktionell beschichtete Kunststofflinse nach einem Verfahren gemäß einem anderen Aspekt hergestellt.

Die Angaben von Zahlenwerten, welche mit "etwa" angegeben sind, können bevorzugt um +/- 10% vom angegebenen Wert, besonders bevorzugt um +/- 5% vom angegebenen Wert, besonders bevorzugt um +/- 2% vom angegebenen Wert abweichen und insbesondere exakt der angegebene Wert sein.

Die Formulierung "im Wesentlichen" meint, dass ein Stoff bzw. ein Material bzw. eine Verbindung zum größten Teil aus dem angegebenen Stoff bzw. Material besteht, d.h. "X besteht im Wesentlichen aus Y" bedeutet, dass der Anteil von Y an X insbesondere größer oder gleich 50 %, bevorzugt größer oder gleich 75 %, besonders bevorzugt größer oder gleich 90 % ist und schließt auch den Fall mit ein, dass X nur aus Y besteht bzw. gebildet ist.

Im Folgenden werden Ausführungsformen der Erfindung anhand von Figuren näher beschrieben. Es versteht sich, dass die vorliegende Erfindung nicht auf diese Ausführungsform beschränkt ist, und dass einzelne Merkmale der Ausführungsform im Rahmen der beiliegenden Ansprüche zu weiteren Ausführungsformen kombiniert werden können. Es zeigt:
- Fig. 1: eine erste bevorzugte Ausführungsform einer Kunststofflinse;
- Fig. 2: eine zweite bevorzugte Ausführungsform einer Kunststofflinse;
- Fig. 3: eine dritte bevorzugte Ausführungsform einer Kunststofflinse;
- Fig. 4: eine vierte bevorzugte Ausführungsform einer Kunststofflinse;
- Fig. 5: ein bevorzugtes Verfahren zum Herstellen einer Kunststofflinse;
- Fig. 6: ein weiteres bevorzugtes Verfahren;
- Fig. 7: ein weiteres bevorzugtes Verfahren;
- Fig. 8: eine bevorzugte Vorrichtung zum Herstellen einer Kunststofflinse.

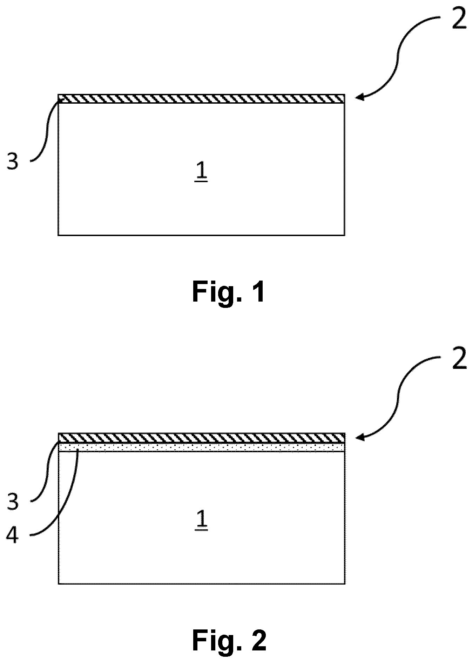

Fig. 1 zeigt eine erste Ausführungsform einer Kunststofflinse 1 mit einer funktionellen Beschichtung 2, wobei die Kunststofflinse 1 ein Substrat aus einem Kunststoffglas aufweist, welches mit einer funktionellen Beschichtung 2 versehen wurde. Die funktionell beschichtete Kunststofflinse 1 weist in dieser Ausführungsform eine Monolage einer funktionellen Schicht 3 auf, mit anderen Worten besteht die funktionelle Beschichtung 2 aus genau einer Monolage der funktionellen Beschichtung 3.

Fig. 2 zeigt eine zweite Ausführungsform einer Kunststofflinse 1 mit einer funktionellen Beschichtung 2, wobei die Kunststofflinse 1 ein Substrat aus einem Kunststoffglas aufweist, wobei auf zumindest einer Oberfläche der Kunststofflinse 1 eine Siliziumoxidschicht 4 angeordnet ist. Die funktionelle Beschichtung 2, welche unmittelbar auf die Siliziumoxidschicht 4 aufgebracht wurde, besteht aus genau einer Monolage der funktionellen Schicht 3. Mit anderen Worten weist die Kunststofflinse 1 eine funktionelle Beschichtung 2 bestehend aus einer Monolage einer funktionellen Schicht 3 auf, welche auf der Siliziumoxidschicht 4 ausgebildet ist bzw. welche unmittelbar auf der Siliziumoxidschicht 4 angeordnet ist.

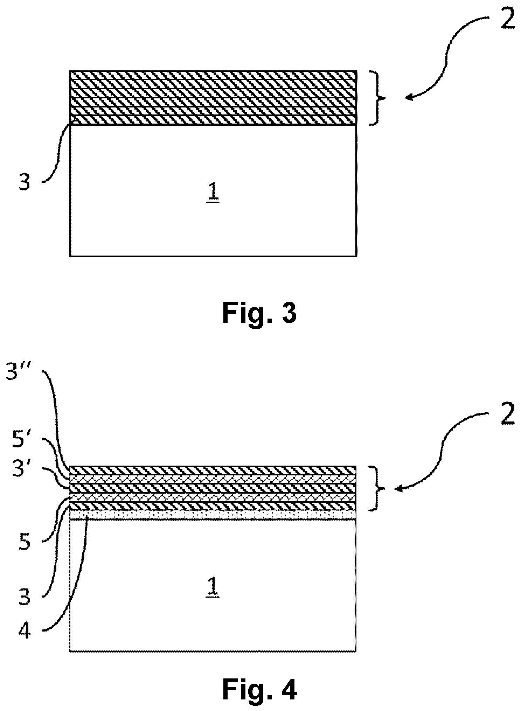

Fig. 3 zeigt eine dritte Ausführungsform einer Kunststofflinse 1 mit einer funktionellen Beschichtung 2, wobei die Kunststofflinse 1 ein Substrat aus einem Kunststoffglas aufweist, welches mit einer funktionellen Beschichtung 2 versehen wurde. Die funktionell beschichtete Kunststofflinse 1 weist in dieser Ausführungsform sechs Monolagen der funktionellen Schicht 3 auf, mit anderen Worten besteht die funktionelle Beschichtung 2 aus genau sechs Monolagen der funktionellen Schicht 3. Zur Herstellung der funktionell beschichteten Kunststofflinse 1 wurde ein Herstellungsverfahren gemäß einem anderen Aspekt angewandt, bei dem der aus den Schritten (II) bis (V) gebildete Zyklus in Summe sechs Mal durchgeführt wurde, um auf die erste Monolage der funktionellen Schicht 3 sukzessive fünf weitere Monolagen der funktionellen Schicht 3 aufzubringen, zum Erhalt einer funktionell beschichteten Kunststofflinse 1, deren funktionelle Beschichtung 2 sechs Monolagen der funktionellen Schicht 3 aufweist.

Fig. 4 zeigt eine vierte Ausführungsform einer Kunststofflinse 1 mit einer funktionellen Beschichtung 2, wobei die Kunststofflinse 1 ein Substrat aus einem Kunststoffglas aufweist, wobei auf zumindest einer Oberfläche der Kunststofflinse 1 eine Siliziumoxidschicht 4 angeordnet ist, auf welcher die funktionelle Beschichtung 2 aufgebracht wurde. Die funktionelle Beschichtung 2 der Kunststofflinse 1 weist in dieser Ausführungsform drei Monolagen der funktionellen Schicht 3, 3', 3" auf, mit anderen Worten, es besteht die funktionelle Beschichtung 2 aus genau drei Monolagen der funktionellen Schicht 3, 3', 3". Zwischen den aufeinander folgenden Monolagen der funktionellen Schicht 3, 3', 3" ist jeweils eine Haftschicht 5, 5' angeordnet bzw. ausgebracht bzw. ausgebildet, welche als Haftvermittler zwischen den einzelnen Monolagen der funktionellen Schicht 3, 3', 3" fungiert. Die Haftschicht 5, 5' ist bevorzugt aus einer Silan- und/oder Siloxan-haltigen Verbindung gebildet, zum Beispiel ist die Haftschicht 5, 5' bevorzugt aus im Wesentlichen Tetramethyldisil(ox)an gebildet. Zur Herstellung der funktionell beschichteten Kunststofflinse 1 wurde ein Herstellungsverfahren gemäß einem anderen Aspekt angewandt, bei dem der aus den Schritten (II) bis (V) gebildete Zyklus in Summe drei Mal durchgeführt wurde, um auf die erste Monolage der funktionellen Schicht 3 sukzessive zwei weitere Monolagen der funktionellen Schicht 3', 3" aufzubringen, zum Erhalt einer funktionell beschichteten Kunststofflinse 1, deren funktionelle Beschichtung 2 drei Monolagen der funktionellen Schicht 3, 3', 3" aufweist, wobei sowohl nach dem ersten Zyklusdurchlauf mit Ausbilden einer ersten Monolage der funktionellen Schicht 3 als auch nach dem zweiten Zyklusdurchlauf mit Ausbilden einer zweiten Monolage der funktionellen Schicht 3' der Schritt S109 Aufbringen einer Haftschicht 5 bzw. 5' erfolgte. Die Eigenschaften der Haftschicht 5, 5', insbesondere Eigenschaften wie die physikalische Schichtdicke und/oder der Brechungsindex, können gleich oder verschieden sein. Nach dem Ausbilden der finalen Monolage der funktionellen Schicht 3" findet vorzugsweise kein Ausbilden einer weiteren Haftschicht statt, damit die funktionellen Eigenschaften unbeeinträchtigt sind. Die Siliziumoxidschicht 4 und die Haftschicht 5, 5' können auch aus dem gleichen Material bzw. der gleichen Verbindung gebildet sein, zum Beispiel kann Tetramethyldisil(ox)an bevorzugt hierfür verwendet werden.

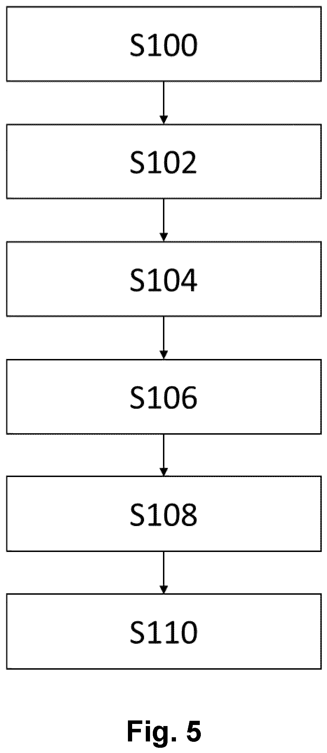

Fig. 5 zeigt eine schematische Zeichnung eines Verfahrens zum Herstellen einer funktionell beschichteten Kunststofflinse 1. In einem ersten Schritt S100 wird eine Kunststofflinse 1, insbesondere ein Kunststoffbrillenglas, bereitgestellt, welches im Rahmen des Verfahrens mit einer funktionellen Beschichtung 2 versehen wird. In einem nächsten Schritt S102 wird eine erste Präkursorverbindung A bereitgestellt, zum Beispiel durch Bereitstellen bzw. Einlassen einer gasförmigen Phase der Präkursorverbindung A, welche zumindest auf einer Oberfläche der Kunststofflinse adsorbiert. In einem nächsten Schritt S104 wird überschüssiges, ungebundenes Material der ersten Präkursorverbindung A entfernt, zum Beispiel durch Abpumpen bzw. Absaugen. In einem nächsten Schritt S106 wird eine zweite Präkursorverbindung B bereitgestellt, zum Beispiel durch Bereitstellen bzw. Einlassen einer gasförmigen Phase der Präkursorverbindung B. Die bereitgestellte zweite Präkursorverbindung B geht eine Reaktion mit der auf der zumindest einen Oberfläche der Kunststofflinse adsorbierten Verbindung A ein und als Produkt der Reaktion wird eine Monolage der funktionellen Schicht auf der zumindest einen Oberfläche der Kunststofflinse gebildet bzw. abgeschieden. Mit anderen Worten, die Monlage der funktionellen Schicht wird gebildet als Produkt der Reaktion aus den Präkursorverbindungen A und B. In einem nächsten Schritt S108 wird überschüssiges, ungebundenes Material der zweiten Präkursorverbindung B entfernt, zum Beispiel durch Abpumpen bzw. Absaugen. In einem anschließenden Schritt S110 liegt eine mit einer Monolage der funktionellen Schicht 3 versehene Kunststofflinse vor. Mit anderen Worten wurde die Kunststofflinse 1 im Rahmen des Verfahrens mit einer funktionellen Beschichtung 2 versehen, wobei die funktionelle Beschichtung 2 zumindest eine Monolage der funktionellen Schicht 3 aufweist.

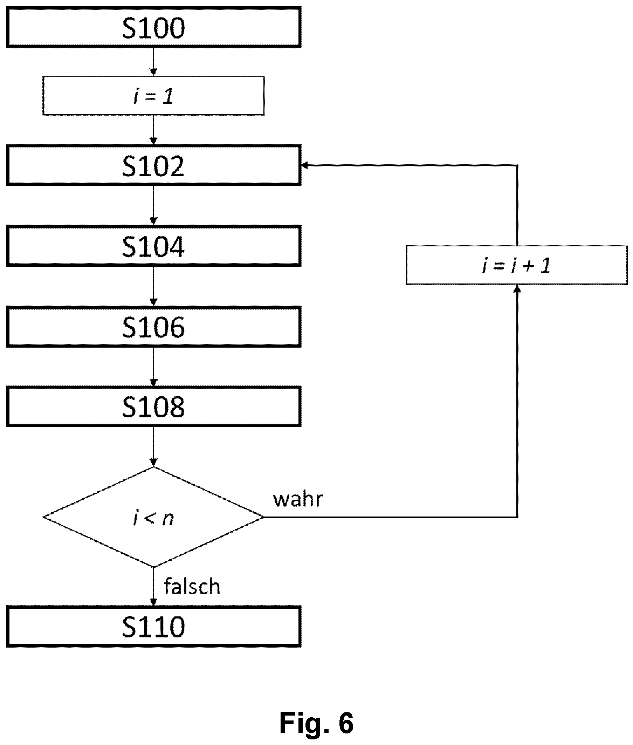

Fig. 6 ist eine schematische Zeichnung einer Weiterbildung des in Fig. 5 vorgestellten Verfahrens zum Herstellen einer funktionell beschichteten Kunststofflinse 1, wobei hierin die Zyklisierung gemäß einer bevorzugten Ausführungsform des Verfahrens dargestellt ist. Durch Vorgabe einer durchzuführenden Anzahl n an Zyklen wird das Verfahren aus Fig. 5 abgewandelt durchgeführt, d.h. die den Zyklus darstellenden Schritte S102 bis S108 werden n-mal durchgeführt, bis die Anzahl n erreicht ist. Diese Zyklisierung ist in Fig. 6 dahingehend dargestellt, dass mit der Durchführungsvariable i, mit Startwert i gleich 1, gestartet wird. Es erfolgt ein erster Durchlauf des Zyklus, gebildet aus den Schritten S102 bis S108. Anschließend erfolgt die Überprüfung, ob die Durchführungsvariable i kleiner als die vorgegebene Anzahl an Zyklusdurchführungen n ist. Ist dies der Fall, d.h. ist i kleiner n, so wird i um eins erhöht, d.h. i ist nun gleich 2, und ein weiterer Zyklus, gebildet aus den Schritten S102 bis S108 wird durchgeführt, d.h. in der zweiten Zyklusdurchführung werden die Schritte S102 bis S108 ein weiteres Mal durchgeführt. Anschließend erfolgt wieder eine Überprüfung, ob die Durchführungsvariable i kleiner als die vorgegebene Anzahl an Zyklusdurchführungen n ist. Ist dies der Fall, so wird ein weiterer Zyklus durchgeführt. Dies wird durchgeführt, bis die Durchführungsvariable i nicht mehr kleiner als die vorgegebene Anzahl an Zyklusdurchführungen n ist, d.h. bis die Anzahl an Zyklusdurchführungen erreicht ist. Das vorgestellte zyklisierte Verfahren eignet sich besonders, um eine möglichst lückenlose Bedeckung der Oberfläche der Kunststofflinse mit der funktionellen Beschichtung zu erhalten, dadurch dass die dafür erforderlichen Schritte mehrmals bzw. n-mal wiederholt werden.

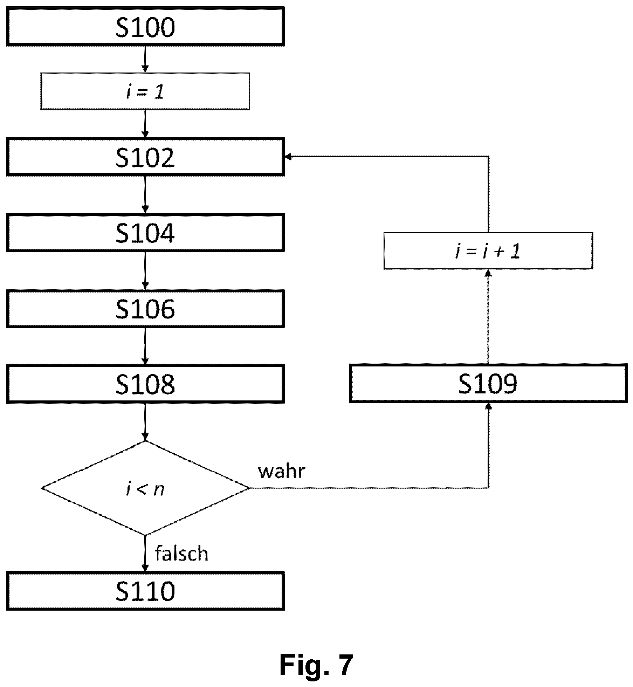

Fig. 7 ist eine schematische Zeichnung einer Weiterbildung des in Fig. 6 vorgestellten zyklisierten Verfahrens zum Herstellen einer funktionell beschichteten Kunststofflinse 1, wobei hierin eine Weiterbildung des Zyklus dahingehend erfolgt, dass ein zusätzlicher Schritt S109 in den Zyklus eingefügt ist, in welchem eine Haftschicht 5, 5' ausgebildet bzw. aufgebracht wird. Auf diese Weise wird ein Verfahren bereitgestellt, in welchem mittels der Zyklisierung mehrere Monolagen der funktionellen Schicht 3 hintereinander auf der Oberfläche der Kunststofflinse ausgebildet werden können. Ohne eine solche Haftschicht 5 bzw. solche Haftschichten 5, 5' könnte(n) keine aufeinander folgenden Monolagen der funktionellen Schicht 3, 3', 3" ausgebildet werden, da keine Quervernetzung zwischen den aufeinander folgenden Monolagen 3 und 3' bzw. 3' und 3" stattfinden würde. Durch diese Weiterbildung wird zwischen den aufeinander folgenden Monolagen der funktionellen Schicht, d.h. zwischen den Monolagen 3 und 3' sowie zwischen den Monolagen 3' und 3" eine Haftschicht 5 bzw. 5' ausgebildet bzw. aufgebracht. Dadurch, dass eine derartige Haftschicht 5, 5' zwischen den einzelnen Monolagen aufgebracht wird, kann vorteilhafterweise eine gute Haftung zwischen den einzelnen Monolagen erhalten werden. Insbesondere in Kombination mit einer Silan-haltigen Präkursorverbindung bietet eine Silan- und/oder Siloxan-haltige Verbindung als eine bevorzugte Haftschicht 5, 5' den Vorteil, dass diese eine sehr gute Anbindung für die im nächsten Zyklusdurchlauf auszubildende, nächste Monolage der funktionellen Schicht 3', 3" darstellt, da die erste Silan-haltige Präkursorverbindung günstigerweise besonders gut auf einer Silan- und/oder Siloxan-haltigen Verbindung als Haftschicht 5, 5' adsorbieren kann.

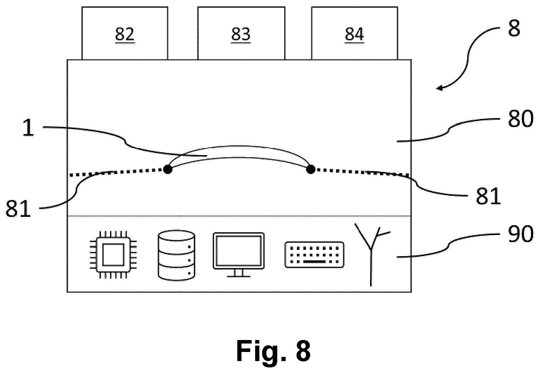

Fig. 8 zeigt eine schematische Zeichnung einer Ausführungsform einer Herstellungsvorrichtung 8. In der Prozesskammer 80 der Herstellungsvorrichtung 8 ist eine Halteeinrichtung 81 zur Aufnahme einer Kunststofflinse 1 angeordnet. Zwei Haltebügel 81, zwischen welchen die mit einer funktionellen Beschichtung 2 zu versehende Kunststofflinse 1 eingespannt wird, sind in dieser Ausführungsform eine bevorzugte Halteeinrichtung 81. Die Haltebügel 81 sind gepunktet eingezeichnet, um zu symbolisieren, dass es sich hierbei lediglich um zwei Bügel handelt und um keine Trennung der Prozesskammer 80. Hierdurch kann die bereitgestellte Kunststofflinse 1 bevorzugt beidseitig, d.h. sowohl auf ihrer konvex geformten Oberfläche als auch auf ihrer konkav geformten Oberfläche mit einer funktionellen Beschichtung 2 versehen werden. Die Herstellungsvorrichtung 8 weist als eine bevorzugte Bereitstellungseinrichtung 82 eine Druckgasfalsche, enthaltend die Präkursorverbindung in gasförmiger Phase, verbunden über eine Edelstahl-Druckgasleitung mit einem regelbaren Ventil an einer Wand der Prozesskammer 80 auf, wobei durch Öffnen des Ventils ein Volumenstrom der gasförmigen Phase der Präkursorverbindung aus der Druckgasflasche über die Druckgasleitung durch das Ventil in die Prozesskammer stattfindet und auf diese Weise die Präkursorverbindung in der Prozesskammer 80 bereitgestellt wird. Die Herstellungsvorrichtung 8 weist eine Drehschieberpumpe 83 zum Abpumpen bzw. Absaugen zum Zwecke des Reinigens der Prozesskammer 80 von ungebundenem Material einer Präkursorverbindung als bevorzugte Entfernungseinrichtung auf. Drehschieber-Pumpen und/oder Membran-Vakuumpumpen eignen sich bevorzugt zum Abpumpen von solchen Präkursorverbindungen. Als optionale Komponente weist die Herstellungsvorrichtung 8 eine Plasmaquelle als bevorzugte Plasmabehandlungseinrichtung 84 auf, welche ein Plasma bereitstellt, um mittels des Plasmas das Eintreten einer Reaktion von zwei Präkursorverbindungen zum Zwecke des Erhaltens einer Monolage einer funktionellen Schicht 3 zu begünstigen. Die Herstellungsvorrichtung 8 weist als optionale Komponente einen Computer als bevorzugte Steuerungseinrichtung 90 auf, welcher eine Tastatur als eine bevorzugte Eingabeeinheit, einen Prozessor als bevorzugte Recheneinheit, eine Festplatte als bevorzugte Speichereinheit und eine serielle Schnittstelle als bevorzugte Kommunikationseinheit aufweist, wobei die serielle Schnittstelle mit der Bereitstellungseinrichtung 82, mit der Entfernungseinrichtung 83 und mit der Plasmaquelle 84 verbunden ist und diese auf geeignete Weise steuern kann.

Das nachfolgende Ausführungsbeispiel dient der weiteren Erläuterung der vorliegenden Erfindung, ohne jedoch hierauf beschränkt zu sein.

Als Kunststofflinse wird ein Kunststoffbrillenglas, aufweisend ein Substrat aus Kunststoffglas gebildet im Wesentlichen aus Polythiourethan mit einem Brechungsindex von 1,60, einer Brechkraft bezogen auf sphärische Wirkung von -2,25 dpt und einem Durchmesser von 60 mm bereitgestellt.

Das Kunststoffbrillenglas wies bereits Vergütungsbeschichtungen auf. Es wurde zunächst mittels eines Tauchbeschichtungsverfahrens ein Hartlack als Kratzschutzschicht aufgebracht. Anschließend wurden beide Oberflächen des Brillenglases, nacheinander, mittels eines ionengestützten physikalischen Gasphasenabscheidungsverfahrens mit einer interferometrischen Entspiegelungsbeschichtung versehen, wobei die beidseits aufgebrachten Entspieglungsbeschichtungen jeweils als letzte Schicht eine Einzelschicht aus SiO₂ aufweisen.

Das Brillenglas wurde dann in einer Herstellungsvorrichtung gemäß einem Aspekt bereitgestellt, d.h. das Kunststoffbrillenglas wurde in der, in der Prozesskammer der Herstellungsvorrichtung befindlichen, Halteeinrichtung angeordnet. In diesem Fall umfasste der Schritt des Bereitstellens das Durchführen einer Plasmabehandlung, wobei das Plasma von einer optional an der Prozesskammer angeschlossenen Plasmaquelle bereitgestellt wurde. Als Plasma wurde ein Argon Plasma verwendet, wobei eine Beschleunigungsspannung von 60 V gewählt wurde. Weitere Parameter des Plasmas sind von der eingesetzten Herstellungsvorrichtung, sowie von der jeweiligen Plasmaquelle abhängig und wurden bewusst ausgelassen, da sie für das weitere Verständnis des Beispiels nicht von Belang sind. Mittels der Plasmabehandlung fand ein Plasmaangriff auf den Oberflächen des Brillenglases statt, wobei hier insbesondere reaktive Hydroxylionen auf den, jeweils auf den Oberflächen angeordneten, äußersten SiO₂-Schichten gebildet wurden, welche polarer als die unbehandelte Oberfläche sind. Die erzeugten, reaktiven Hydroxylionen wiesen eine hohe Bindungsaffinität auf.

Sowohl während des Bereitstellungsschrittes, welcher wie beschrieben eine Plasmabehandlung umfasste, also auch während der gesamten, noch folgenden Prozessschritte wurde mittels einer elektrischen Heizung eine Temperatur von etwa 75 °C in der Prozesskammer sichergestellt. Hierfür war die Prozesskammer mit entsprechenden elektrischen Heizplatten versehen und verfügte zusätzlich über einen Temperatursensor und eine entsprechende Regelung in der Steuerungseinrichtung, welche sicherstellte, dass die Heizung bedarfsgemäß aktiviert bzw. deaktiviert wurde, um während des gesamten Prozesses ein Vorhandensein einer Temperatur von etwa 75 °C sicherzustellen und, insbesondere, ein Überschreiten dieser Temperatur zu unterbinden.

In einem nächsten Schritt wurde als eine erste Präkursorverbindung Dodecyltrichlorosilan (DTS) in der Prozesskammer bereitgestellt, wobei DTS gegenüber Octadecyltrichlorosilan (ODTS) bevorzugt wurde, da DTS im Allgemeinen einen niedrigen Siedepunkt als ODTS aufweist und damit insbesondere für ein solches Verfahren bei niedrigen Temperaturen bevorzugt geeignet war. Das DTS befand sich in flüssiger Phase in einem Reservoir, verbunden über einer Zuleitung mit einem an der Prozesskammer befindlichen Ventil. Durch den sich einstellenden Dampfdruck bei der eingestellten Prozesstemperatur von etwa 75 °C war ein Teil als gasförmige Phase vorhanden, welche mit Argon als bevorzugtem Trägergas in die Prozesskammer geleitet wurde. Für eine Verweildauer von etwa einer Minute befand sich das gasförmige DTS in der Prozesskammer. Durch die, im Vergleich zu ALD-Verfahren bei deutlich höheren Temperaturen, welche im Sekundenbereich liegen, lange Verweildauer in Kombination mit einer geregelten Temperatur von 75 °C wurde sichergestellt, dass einerseits ausreichend Zeit und andererseits ausreichend Energie zum Überkommen der für die Adsorption benötigten Aktivierungsenergie vorhanden waren, damit das DTS an der (bzw. den) Oberfläche(n) des Brillenglases, insbesondere flächendeckend bzw. lückenlos adsorbieren konnte. Durch die vorangegangene Plasmabehandlung der (bzw. den) Oberfläche(n) des Brillenglases, insbesondere durch das dadurch bedingte Ausbilden von Hydroxylionen auf der auf der (bzw. den) Oberfläche(n) des Brillenglases angeordneten Siliziumoxidschicht, lagen hinreichend Bindungspartner vor, um die Adsorption zu ermöglichen bzw. zu begünstigen.

In einem nächsten Schritt wurde das in der Prozesskammer noch befindliche, überschüssige, ungebundene DTS mittels einer Drehschieberpumpe durch Abpumpen bzw. Absaugen entfernt. Hierdurch blieb eine gereinigte Prozesskammer zurück, welche keine Rückstände von DTS aufwies. Insbesondere lag DTS danach nur noch in gebundener Form, durch Adsorption an den Oberflächen des Brillenglases vor.

In einem nächsten Schritt wurde H₂O als zweite Präkursorverbindung in der Prozesskammer bereitgestellt. Das H₂O lag in flüssiger Phase in einem Reservoir vor, welches über einer Zuleitung mit einem an der Prozesskammer befindlichen Ventil verbunden war. Durch den sich einstellenden Dampfdruck bei der eingestellten Prozesstemperatur von etwa 75 °C ist ein Teil als gasförmige Phase vorhanden, welche mit Argon als bevorzugtem Trägergas in die Prozesskammer geleitet wurde. Für eine Verweildauer von etwa 100 Minuten befand sich das gasförmige H₂O in der Prozesskammer. Durch die sehr lange Verweildauer in Kombination mit einer geregelten Temperatur von 75 °C wurde sichergestellt, dass einerseits ausreichend Zeit und andererseits ausreichend Energie zum Überkommen der Aktivierungsenergie für die Reaktion der Präkursorverbindungen DTS und H₂O zum Ausbilden einer Monolage einer funktionellen Schicht, gebildet als Reaktionsprodukt von DTS und H₂O, vorhanden war.

Das bereitgestellte gasförmige H₂O (Wasserdampf) startete eine Hydrolysereaktion, infolgedessen das auf der (bzw. den) Oberfläche(n) des Brillenglases adsorbierte DTS eine feste Bindung mit der Brillenglasoberfläche einging und sich eine Monolage einer funktionellen Schicht, gebildet als Produkt der Reaktion von DTS und Wasserdampf, ausbildete. Mit anderen Worten wurde auf diese Weise ein Brillenglas mit einer funktionellen Beschichtung versehen, wobei die funktionelle Beschichtung aus genau einer Monolage einer funktionellen Schicht, gebildet als Produkt der beiden Präkursorverbindungen DTS und Wasserdampf. Durch das im vorangegangenen Schritt stattgefundene Entfernen von ungebundenem DTS wurde sichergestellt, dass die angestrebte Reaktion zum Ausbilden einer Monolage einer funktionellen Schicht nur auf der (bzw. den) Oberfläche(n) des Brillenglases erfolgt und keine Reaktionen anderweitig in der Prozesskammer stattfinden, insbesondere keine Reaktionen an den Wänden der Prozesskammer und besonders keine Gasphasenreaktionen. Hierdurch konnte erreicht werden, dass das Ausbilden der Monolage der funktionellen Schicht nur auf der (bzw. den) Oberfläche(n) des Brillenglases erfolgte.

In einem nächsten Schritt wurde der überschüssige und ungebundene Wasserdampf durch Abpumpen aus der Prozesskammer entfernt.

Abschließend lag ein mit einer funktionellen Beschichtung versehenes Brillenglas vor. Das so erhaltene, funktionell beschichtete Brillenglas wies einen Kontaktwinkel gegenüber H₂O von 95° und einen Kontaktwinkel gegenüber Hexadecan (C₁₆H₃₄) von 35° auf. Hierdurch weist die funktionell beschichtete Kunststofflinse günstigerweise eine sehr gute Abweisung von Wassertropfen und Schmutz auf.

Mittels des vorgestellten Verfahrens ist es damit möglich, eine Kunststofflinse mittels eines genau beherrschbaren Herstellungsverfahrens mit insbesondere einer Monolage einer funktionellen Schicht zu versehen, wobei diese funktionelle Schicht eine funktionelle Beschichtung darstellt, welche der Kunststofflinse zusätzliche Eigenschaften verleiht. Zum Beispiel können hierunter insbesondere hydrophobe und/oder oleophobe Eigenschaften verstanden werden.

## Patentansprüche

1. Verfahren zur Herstellung einer funktionell beschichteten Kunststofflinse (1), insbesondere eines Kunststoffbrillenglases, wobei das Verfahren die folgenden Schritte aufweist:
(I) Bereitstellen (S100) einer Kunststofflinse (1), aufweisend ein Substrat aus Kunststoffglas;
(II) Bereitstellen (S102) einer gasförmigen Phase einer ersten Präkursorverbindung A zum Erhalt zumindest einer, durch Adsorption der Präkursorverbindung A, modifizierten Oberfläche der Kunststofflinse;
(III) Entfernen (S104) von überschüssigem, nicht an der modifizierten Oberfläche der Kunststofflinse adsorbiertem, Material der Präkursorverbindung A;
(IV) Bereitstellen (S106) einer gasförmigen Phase einer zweiten Präkursorverbindung B, welche mit der an der modifizierten Oberfläche adsorbierten Präkursorverbindung A reagiert, und als Produkt der Reaktion das Ausbilden einer Monolage einer funktionellen Schicht (3, 3', 3") auf der Oberfläche der Kunststofflinse bewirkt;
(V) Entfernen (S108) von überschüssigem Material der Präkursorverbindung B, welches keine Verbindung mit der modifizierten Oberfläche eingegangen ist;
(VI) Erhalten (S110) der mit einer funktionellen Beschichtung (2) versehenen Kunststofflinse (1),
wobei die ausgebildete funktionelle Beschichtung (2) der Kunststofflinse (1) hydrophobe und oleophobe Eigenschaften verleiht,
**dadurch gekennzeichnet, dass**
eine der beiden Präkursorverbindungen eine Silan-haltige Verbindung ist, und wobei die Silan-haltige Verbindung im Wesentlichen Octadecyltrichlorosilan (ODTS), Hexadecyltrichlorosilan (HDTS), Tetradecyltrichlorosilan (TDTS), Dodecyltrichlorosilan (DTS), Decyltrichlorosilan, Octyltrichlorosilan, Octadecyltrimethoxysilan (ODTMS), Dodecyltrimethoxysilan (DTMS), Hexadecyltrimethoxysilan (HDTMS), Octadecyltriethoxysilan, Dodecyltriethoxysilan oder Hexadecyltriethoxysilan ist.

2. Verfahren nach Anspruch 1, wobei das Verfahren bei einer Temperatur von kleiner oder gleich 100 °C, bevorzugt kleiner oder gleich 75 °C, besonders bevorzugt kleiner oder gleich 50 °C, durchgeführt wird.

3. Verfahren nach Anspruch 1 oder 2, wobei das Kunststoffglas der Kunststofflinse (1) im Wesentlichen aus Poly(thio)urethan, Polymethylmethacrylat, Polymethylacrylat, Polycarbonat, Polyacrylat oder Polydiethylenglycolbisallylcarbonat gebildet ist.

4. Verfahren nach einem der vorangegangenen Ansprüche, wobei die Kunststofflinse (1) zumindest eine Oberfläche aufweist, auf welcher eine Siliziumoxidschicht (4), mittelbar oder unmittelbar, angeordnet ist.

5. Verfahren nach Anspruch 4, wobei die Siliziumoxidschicht (4) als Substrat-fernste, äußerste Einzelschicht Teil eines mehrschichtigen, insbesondere interferometrischen, Schichtsystems ist.

6. Verfahren nach einem der vorangegangenen Ansprüche, wobei die ausgebildete funktionelle Beschichtung (2) der Kunststofflinse (1) einen Kontaktwinkel gegenüber H₂O von größer oder gleich 90°, bevorzugt größer oder gleich 100°, und/oder einen Kontaktwinkel gegenüber Hexadecan (C₁₆H₃₄) von größer oder gleich 30°, verleiht.

7. Verfahren nach einem der vorangegangenen Ansprüche, wobei in einem, in zwei, in mehreren oder in allen, der Schritte (I) bis (VI) zumindest eine oder mehrere der Bedingungen vorherrschen:
- angepasste Druckverhältnisse; und/oder
- angepasste Temperatur; und/oder
- (reaktives) Plasma; und/oder
- Vorhandensein eines Katalysators; und/oder
- angepasste Verweildauer(n) der Präkursorverbindung(en); und/oder
- Bestrahlung mit Laserstrahlung; und/oder
- Bestrahlung mit UV-Strahlung; und/oder
- Beschuss mit energetischen Teilchen; und/oder
- Vorhandensein elektrischer Felder.

8. Verfahren nach einem der vorangegangenen Ansprüche, wobei die andere Präkursorverbindung im Wesentlichen H₂O ist.

9. Verfahren nach einem der vorangegangenen Ansprüche, wobei die Schritte (II) bis (V) einen Zyklus darstellen, welcher n-mal durchgeführt wird, wobei die Anzahl der Durchführungen des Zyklus n bevorzugt zwischen 1 und 100 ist, besonders bevorzugt zwischen 1 und 50 ist, zum Erhalt einer funktionell beschichteten Kunststofflinse, wobei die funktionelle Beschichtung (2) eine Vielzahl n an sukzessive nacheinander ausgebildeten Monolagen der funktionellen Schicht (3, 3', 3") aufweist.

10. Verfahren nach Anspruch 9, wobei zwischen aufeinander folgenden Monolagen der funktionellen Schicht (3, 3', 3") eine Haftschicht (5, 5') ausgebildet ist.

11. Funktionell beschichtete Kunststofflinse (1), insbesondere Kunststoffbrillenglas, welche aus einem Substrat aus einem Kunststoffglas besteht und auf zumindest einer Oberfläche genau eine Monolage einer funktionellen Schicht (3) aufweist, wobei die Monolage einer funktionellen Schicht (3) der funktionell beschichteten Kunststofflinse hydrophobe und oleophobe Eigenschaften verleiht, **dadurch gekennzeichnet, dass** die funktionelle Schicht mit einem Verfahren nach einem der Ansprüche 1 bis 10 ausgebildet wurde.

12. Funktionell beschichtete Kunststofflinse (1) nach Anspruch 11, wobei die Monolage einer funktionellen Schicht (3) der funktionell beschichteten Kunststofflinse einen Kontaktwinkel gegenüber H₂O von größer oder gleich 90°, bevorzugt größer oder gleich 100°, und/oder einen Kontaktwinkel gegenüber Hexadecan (C₁₆H₃₄) von größer oder gleich 30°, bevorzugt größer oder gleich 60°, verleiht.

## Claims

1. A method for manufacturing a functionally coated plastic lens (1), in particular a plastic eyeglass lens, wherein the method comprises the following steps:
(I) providing (S100) a plastic lens (1) comprising a plastic lens substrate;
(II) providing (S102) a gaseous phase of a first precursor compound A to obtain at least one surface of the plastic lens modified by adsorption of the precursor compound A;
(III) removing (S104) excess material of the precursor compound A that has not been adsorbed onto the modified surface of the plastic lens;
(IV) providing (S106) a gaseous phase of a second precursor compound B, which reacts with the precursor compound A adsorbed on the modified surface and, as a product of the reaction, causes the formation of a monolayer of a functional layer (3, 3', 3") on the surface of the plastic lens;
(V) removing (S108) excess material of the precursor compound B that has not bonded to the modified surface;
(VI) obtaining (S110) the plastic lens (1) provided with a functional coating (2),
wherein the formed functional coating (2) imparts hydrophobic and oleophobic properties to the plastic lens (1), **characterized in that**
one of the two precursor compounds is a silane-containing compound, and wherein the silane-containing compound is essentially octadecyltrichlorosilane (ODTS), hexadecyltrichlorosilane (HDTS), tetradecyltrichlorosilane (TDTS), dodecyltrichlorosilane (DTS), decyltrichlorosilane, octyltrichlorosilane, octadecyltrimethoxysilane (ODTMS), dodecyltrimethoxysilane (DTMS), hexadecyltrimethoxysilane (HDTMS), octadecyltriethoxysilane, dodecyltriethoxysilane, or hexadecyltriethoxysilane.

2. The method according to claim 1, wherein the method is carried out at a temperature of 100 °C or less, preferably 75 °C or less, and most preferably 50 °C or less.

3. The method according to claim 1 or 2, wherein the plastic element of the plastic lens (1) is formed essentially from poly(thio)urethane, polymethyl methacrylate, polymethyl acrylate, polycarbonate, polyacrylate, or polydiethylene glycol bisallyl carbonate.

4. The method according to any of the preceding claims, wherein the plastic lens (1) has at least one surface on which a silicon oxide layer (4) is arranged, either directly or indirectly.

5. The method according to claim 4, wherein the silicon oxide layer (4), as the outermost single layer farthest from the substrate, is part of a multilayer, in particular interferometric, layer system.

6. The method according to any of the preceding claims, wherein the formed functional coating (2) of the plastic lens (1) imparts a contact angle with respect to H₂O of greater than or equal to 90°, preferably greater than or equal to 100°, and/or a contact angle with respect to hexadecane (C₁₆H₃₄) of greater than or equal to 30°.

7. The method according to any one of the preceding claims, wherein in one, two, several, or all of the steps (I) through (VI), at least one or more of the following conditions prevail:
- adjusted pressure conditions; and/or
- adjusted temperature; and/or
- (reactive) plasma; and/or
- the presence of a catalyst; and/or
- adjusted dwell time(s) of the precursor compound(s); and/or
- irradiation with laser radiation; and/or
- irradiation with UV radiation; and/or
- bombardment with energetic particles; and/or
- the presence of electric fields.

8. The method according to any one of the preceding claims, wherein the other precursor compound is essentially H₂O.

9. The method according to any one of the preceding claims, wherein the steps (II) to (V) constitute a cycle that is performed n times, wherein the number of times the cycle is performed, n, is preferably between 1 and 100, more preferably between 1 and 50, to obtain a functionally coated plastic lens, wherein the functional coating (2) comprises a plurality of n monolayers of the functional layer (3, 3', 3") formed successively one after another.

10. The method according to claim 9, wherein an adhesive layer (5, 5') is formed between successive monolayers of the functional layer (3, 3', 3").

11. A functionally coated plastic lens (1), in particular a plastic eyeglass lens, comprising a substrate made of a plastic lens material and having exactly one monolayer of a functional layer (3) on at least one surface, wherein the monolayer of a functional layer (3) imparts hydrophobic and oleophobic properties to the functionally coated plastic lens, **characterized in that** the functional layer was formed using a method according to one of claims 1 to 10.

12. The functionally coated plastic lens (1) according to claim 11, wherein the monolayer of a functional layer (3) of the functionally coated plastic lens provides a contact angle with respect to H₂O of greater than or equal to 90°, preferably greater than or equal to 100°, and/or a contact angle with respect to hexadecane (C₁₆H₃₄) of greater than or equal to 30°, preferably greater than or equal to 60°.

## Revendications

1. Procédé de fabrication d'une lentille en plastique (1) à revêtement fonctionnel, en particulier d'un verre de lunettes en plastique, dans lequel le procédé présente les étapes suivantes :
(I) la mise à disposition (S100) d'une lentille en plastique (1), présentant un substrat en verre plastique ;
(II) la mise à disposition (S102) d'une phase gazeuse d'un premier composé précurseur A pour obtenir au moins une surface de la lentille en plastique modifiée par adsorption du composé précurseur A ;
(III) l'élimination (S104) d'un excès de matériau du composé précurseur A non adsorbé sur la surface modifiée de la lentille en plastique ;
(IV) la mise à disposition (S106) d'une phase gazeuse d'un second composé précurseur B qui réagit avec le composé précurseur A adsorbé sur la surface modifiée et, en tant que produit de la réaction, entraîne la réalisation d'une monostrate d'une couche fonctionnelle (3, 3', 3") sur la surface de la lentille en plastique ;
(V) l'élimination (S108) d'un excédent de matériau du composé précurseur B qui n'a pas engendré de liaison avec la surface modifiée ;
(VI) l'obtention (S110) de la lentille en plastique (1) munie d'un revêtement fonctionnel (2),
dans lequel le revêtement fonctionnel (2) réalisé confère des propriétés hydrophobes et oléophobes à la lentille en plastique (1),
**caractérisé en ce que**
l'un des deux composés précurseurs est un composé contenant du silane, et dans lequel le composé contenant du silane est sensiblement l'octadécyltrichlorosilane (ODTS), l'hexadécyltrichlorosilane (HDTS), le tétradécyltrichlorosilane (TDTS), le dodécyltrichlorosilane (DTS), le décyltrichlorosilane, l'octyltrichlorosilane, l'octadecyltriméthoxysilane (ODTMS), le dodécyltriméthoxysilane (DTMS), l'hexadécyltriméthoxysilane (HDTMS), l'octadécyltriéthoxysilane, le dodécyltriéthoxysilane ou l'hexadécyltriéthoxysilane.

2. Procédé selon la revendication 1, dans lequel le procédé est mis en œuvre à une température inférieure ou égale à 100 °C, de préférence inférieure ou égale à 75 °C, de manière particulièrement préférée inférieure ou égale à 50 °C.

3. Procédé selon la revendication 1 ou 2, dans lequel le verre plastique de la lentille en plastique (1) est formé sensiblement de poly(thio)uréthane, de polyméthacrylate de méthyle, de polyacrylate de méthyle, de polycarbonate, de polyacrylate ou de carbonate de polydiéthylèneglycolbisallyle.

4. Procédé selon l'une quelconque des revendications précédentes, dans lequel la lentille en plastique (1) présente au moins une surface sur laquelle est disposée, indirectement ou directement, une couche d'oxyde de silicium (4).

5. Procédé selon la revendication 4, dans lequel la couche d'oxyde de silicium (4) fait partie d'un système de couches multicouches, en particulier interférométriques, en tant que couche unique la plus éloignée du substrat.

6. Procédé selon l'une quelconque des revendications précédentes, dans lequel le revêtement fonctionnel (2) réalisé de la lentille en plastique (1) confère un angle de contact par rapport à H₂O supérieur ou égal à 90°, de préférence supérieur ou égal à 100°, et/ou un angle de contact par rapport à l'hexadécane (C₁₆H₃₄) supérieur ou égal à 30°.

7. Procédé selon l'une quelconque des revendications précédentes, dans lequel dans une, dans deux, dans plusieurs ou dans toutes les étapes (I) à (VI) au moins une ou plusieurs des conditions suivantes prévalent :
- des rapports de pression adaptés ; et/ou
- une température adaptée ; et/ou
- du plasma (réactif) ; et/ou
- la présence d'un catalyseur ; et/ou
- une(des) durée(s) de séjour adaptée(s) du(des) composé(s) précurseur(s) ; et/ou
- une irradiation avec un rayonnement laser ; et/ou
- une irradiation avec un rayonnement UV ; et/ou
- un bombardement avec des particules énergétiques ; et/ou
- la présence de champs électriques.

8. Procédé selon l'une quelconque des revendications précédentes, dans lequel l'autre composé précurseur est sensiblement H₂O.

9. Procédé selon l'une quelconque des revendications précédentes, dans lequel les étapes (II) à (V) représentent un cycle qui est exécuté n fois, dans lequel le nombre d'exécutions du cycle n est de préférence compris entre 1 et 100, de manière particulièrement préférée entre 1 et 50, pour obtenir une lentille en plastique à revêtement fonctionnel, dans lequel le revêtement fonctionnel (2) présente une pluralité n de monostrates successivement réalisées de la couche fonctionnelle (3, 3', 3'').

10. Procédé selon la revendication 9, dans lequel une couche d'adhérence (5, 5') est réalisée entre les monostrates successives de la couche fonctionnelle (3, 3', 3'').

11. Lentille en plastique (1) à revêtement fonctionnel, en particulier verre de lunettes en plastique, qui est constitué d'un substrat composé d'un verre plastique et présente sur au moins une surface exactement une monostrate d'une couche fonctionnelle (3), dans laquelle la monostrate d'une couche fonctionnelle (3) confère des propriétés hydrophobes et oléophobes à la lentille en plastique à revêtement fonctionnel, **caractérisée en ce que** la couche fonctionnelle a été réalisée avec un procédé selon l'une quelconque des revendications 1 à 10.

12. Lentille en plastique (1) à revêtement fonctionnel selon la revendication 11, dans laquelle la monostrate d'une couche fonctionnelle (3) de la lentille en plastique à revêtement fonctionnel confère un angle de contact par rapport à H₂O supérieur ou égal à 90°, de préférence supérieur ou égal à 100°, et/ou un angle de contact par rapport à l'hexadécane (C₁₆H₃₄) supérieur ou égal à 30°, de préférence supérieur ou égal à 60°.
